(19) Europäisches Patentamt
European Patent Office
Office européen des brevets

(11) EP 3 990 517 B1

(12) FASCICULE DE BREVET EUROPEEN

(45) Date de publication et mention de la délivrance du brevet:
**31.07.2024 Bulletin 2024/31**

(21) Numéro de dépôt: **20733489.7**

(22) Date de dépôt: **23.06.2020**

(51) Classification Internationale des Brevets (IPC):
***C08G 63/06*** *(2006.01)*

(52) Classification Coopérative des Brevets (CPC):
**C08G 63/06**

(86) Numéro de dépôt international:
**PCT/EP2020/067548**

(87) Numéro de publication internationale:
**WO 2020/260312 (30.12.2020 Gazette 2020/53)**

# (54) PROCÉDÉ DE PRÉPARATION D'UN ÉLASTOMÈRE À PARTIR D'UN ACIDE GRAS HYDROXYLÉ ET ÉLASTOMÈRE OBTENU PAR UN TEL PROCÉDÉ

VERFAHREN ZUR HERSTELLUNG EINES ELASTOMERS AUS EINER HYDROXYLIERTEN FETTSÄURE UND DURCH EIN SOLCHES VERFAHREN ERHALTENES ELASTOMER

METHOD FOR PREPARING AN ELASTOMER FROM A HYDROXYLATED FATTY ACID AND ELASTOMER OBTAINED BY SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2019 FR 1906915**

(43) Date de publication de la demande:
**04.05.2022 Bulletin 2022/18**

(73) Titulaires:
- **Institut national de recherche pour l'agriculture, l'alimentation et l'environnement 75007 Paris (FR)**
- **Institute National Polytechnique de Toulouse 31029 Toulouse Cedex 4 (FR)**
- **Centre national de la recherche scientifique 75016 Paris (FR)**
- **Nantes Université 44000 Nantes (FR)**
- **Ecole Nationale Vétérinaire, Agroalimentaire et de l'Alimentation 44307 Nantes (FR)**

(72) Inventeurs:
- **BAKAN, Bénédicte 44300 Nantes (FR)**
- **MARION, Didier 44300 Nantes (FR)**
- **LOURDIN, Denis 44240 Sucé sur Erdre (FR)**
- **MARC, Mathilde 44300 Nantes (FR)**
- **VALENTIN, Romain 31400 Toulouse (FR)**
- **MOULOUNGUI, Zéphirin 31200 Toulouse (FR)**
- **LEROY, Eric 44360 Saint Etienne de Montluc (FR)**
- **LOPEZ, Christelle 35740 Pacé (FR)**

(74) Mandataire: **Ipside 6, Impasse Michel Labrousse 31100 Toulouse (FR)**

(56) Documents cités:
**WO-A1-2011/144792 WO-A1-2017/147708**

- **JOSÉ J. BENÍTEZ ET AL: "Valorization of Tomato Processing by-Products: Fatty Acid Extraction and Production of Bio-Based Materials", MATERIALS, vol. 11, no. 11, 7 November 2018 (2018-11-07), pages 2211, XP055667880, DOI: 10.3390/ma11112211**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention s'inscrit dans le domaine des polymères, et plus particulièrement des élastomères, c'est-à-dire des polymères dotés de propriétés d'élasticité caoutchoutique.

Plus particulièrement, la présente invention concerne un procédé de préparation d'un polymère à base d'un acide gras polyhydroxylé ou d'un ester d'un tel acide gras, ainsi qu'un polymère susceptible d'être obtenu par un tel procédé.

Un acide gras ω-hydroxylé est défini comme un acide gras contenant au moins un groupement hydroxyle OH en position ω, c'est-à-dire porté par le dernier atome de carbone de la chaine de l'acide gras, le premier atome de carbone de la chaine étant l'atome de carbone du groupement carboxyle de la molécule. Par convention, on désigne généralement, et dans la présente description, par l'expression acide gras ω-hydroxylé, un acide gras comportant un seul groupement hydroxyle, située en position ω. On désigne en outre, par acide gras polyhydroxylé, de manière également conventionnelle, un acide gras comprenant une pluralité de groupements hydroxyle, dont au moins un est situé en position ω. Un acide gras dihydroxylé comprend ainsi deux groupements hydroxyle dont au moins un est situé en position ω, un acide gras trihydroxylé comprend trois groupements hydroxyle dont au moins un est situé en position ω, etc.

Les polymères à propriétés caoutchoutiques, ou élastomères, trouvent application dans de nombreux domaines, notamment dans les domaines de l'électronique, des matériaux composites, de la protection des pièces contre la corrosion, etc., dans lesquels leurs propriétés d'élasticité sont mises à profit pour la fabrication de produits divers, pour des applications dans des secteurs aussi variés que le secteur automobile, le secteur aéronautique, le secteur médical, etc.

La valorisation des agro-ressources constitue par ailleurs actuellement un des enjeux de la recherche en chimie verte. Un objectif important de l'industrie chimique est de mettre en oeuvre des matières premières renouvelables, biodégradables et non toxiques pour la préparation de substances et produits divers, et notamment pour la préparation de matériaux polymères.

La présente invention s'inscrit dans cet objectif. Les présents inventeurs se sont plus particulièrement intéressés aux composés d'origine végétale que sont les acides gras de type ω-hydroxylés et polyhydroxylés. Ces acides gras, à longue chaîne carbonée, peuvent être extraits des plantes, en particulier des cuticules des fruits et légumes, et plus particulièrement de la cutine entrant dans la constitution de ces cuticules. Bien que présents en quantité importante dans la nature, ils sont à l'heure actuelle peu valorisés.

La présente invention vise à proposer une solution de valorisation de tels acides gras hydroxylés, dans le contexte particulier de la préparation de polymères à capacité de déformation élastique.

Une telle solution, pour former un biopolyester, a été proposée par l'art antérieur, illustré notamment par la publication de Benitez et al., dans Biochimica et Biophysica Acta, 2004, 1674: 1-3. Ce document décrit un procédé de préparation d'un biopolyester identique à la cutine naturelle, à partir de monomères extraits de cutine de tomate, par une réaction de polycondensation en présence d'un catalyseur, l'acide dodécylbenzènesulfonique, dans le toluène. Plus récemment, la publication de Benitez et al., dans Materials, 2018, 11, 2211, a proposé un procédé similaire dans lequel la réaction de polycondensation est réalisée en l'absence de catalyseur.

Le document WO 2017/147708 décrit un procédé de préparation d'un polymère à partir d'acide gras ω-hydroxylé et de 2-butyl-2-éthyl-1,3-propanediol, mettant en oeuvre un catalyseur.

Le document WO 2011/144792 divulgue un procédé de préparation d'un polyester à base d'acide aleuritique.

Il a maintenant été découvert par les inventeurs qu'il est possible de fabriquer, à partir d'acides gras polyhydroxylés, ou de leurs esters, des polymères présentant des propriétés élastiques caoutchouteuses, dont les propriétés, notamment d'élasticité et les propriétés thermomécaniques, peuvent être précisément et facilement contrôlées, sans mettre en oeuvre de catalyseur, par un choix adéquat des réactifs et du mode opératoire mis en oeuvre.

La présente invention vise ainsi à proposer un procédé de préparation, à partir d'un acide gras polyhydroxylé ou d'un ester d'un acide gras polyhydroxylé, d'un élastomère dont les propriétés caoutchouteuses peuvent être modulées de manière maîtrisée.

Des objectifs supplémentaires de l'invention sont que ce procédé soit facile à mettre en oeuvre, qu'il n'utilise aucun produit qui soit toxique pour l'homme et les animaux et/ou nocif pour l'environnement, et qu'il permette de former un élastomère recyclable, qui plus est à un faible prix de revient.

Ainsi, selon un premier aspect, il est proposé par la présente invention un procédé de préparation d'un polymère de type polyester, plus particulièrement d'un élastomère sous forme d'un réseau tridimensionnel thermodurci, à base d'au moins un acide gras polyhydroxylé. Ce procédé comprend les étapes successives suivantes :

- la préparation d'un milieu réactionnel, par mélange/mise en présence :

  - d'un monomère choisi parmi les acides gras polyhydroxylés et les esters d'un acide gras polyhydroxylé et d'un alcool à chaine aliphatique linéaire ou ramifiée, saturée ou insaturée, éventuellement substituée, ladite chaine aliphatique comportant de 1 à 18 atomes de carbone ; ou d'un mélange d'acides gras hydroxylés et/ou d'esters

d'un acide gras hydroxylé et d'un alcool à chaine aliphatique linéaire ou ramifiée, saturée ou insaturée, éventuellement substituée, ladite chaine aliphatique comportant de 1 à 18 atomes de carbone, ledit mélange contenant au moins 20 % en poids dudit monomère par rapport au poids total dudit mélange d'acides gras hydroxylés et/ou d'esters,

- avec un polyol différent dudit monomère et le cas échéant différent desdits acides gras hydroxylés et/ou desdits esters dudit mélange (esters d'un acide gras hydroxylé et d'un alcool à chaine aliphatique linéaire ou ramifiée, saturée ou insaturée, éventuellement substituée, ladite chaine aliphatique comportant de 1 à 18 atomes de carbone),

ce milieu réactionnel étant exempt de catalyseur,

- et une étape de chauffage du milieu réactionnel pour réaliser la copolymérisation du monomère et du polyol et la réticulation du polymère ainsi formé. Au moins une phase initiale de cette étape de chauffage est réalisée sous pression réduite, à une pression comprise entre 0 et 900 mbar.

On entend par là qu'une pression réduite est appliquée au moins en début de l'étape de chauffage, dans les premiers temps de cette étape.

Le polymère formé par un tel procédé, à partir dudit monomère constitué d'un acide gras polyhydroxylé ou d'un ester d'un tel acide gras, met avantageusement en jeu non seulement des liaisons esters linéaires / primaires impliquant les groupements hydroxyles en position $\omega$ du monomère, mais aussi des liaisons esters secondaires impliquant les autres groupements hydroxyles, contenus dans la chaine carbonée, du monomère. Il en résulte un schéma de réticulation à branchements multiples dans la structure du polymère obtenu, qui est modulable, ce qui permet de contrôler les propriétés du polymère, et qui est bien plus avantageux que celui obtenu avec les acides gras $\omega$-hydroxylés, à une seule fonction hydroxyle, proposés par l'art antérieur. L'ensemble de ces étapes sont de préférence réalisées en récipient unique, de préférence dans un moule présentant une forme adéquate pour l'application visée du polymère obtenu à l'issue du procédé. L'ensemble des phases de l'étape de chauffage sont en outre de préférence réalisées au moyen d'un même dispositif de chauffage.

Le dispositif de chauffage dans lequel est mis en oeuvre le procédé selon l'invention est classique en lui-même. Il s'agit notamment d'un four, pouvant présenter une ou plusieurs zones de température, équipé de moyens pour y établir une pression réduite, ainsi que, de préférence, de moyens d'agitation d'un récipient / moule placé en son intérieur.

Outre le fait d'être exempt de catalyseur, c'est-à-dire de promoteur / accélérateur de réaction, le milieu réactionnel est en outre de préférence dépourvu de solvant, et de préférence également dépourvu de bloqueur de chaîne.

L'étape de chauffage du procédé selon l'invention est avantageusement mise en oeuvre dans des conditions permettant de réaliser l'estérification d'un ou plusieurs des groupements hydroxyles du polyol par la fonction acide du monomère, de sorte à permettre la réticulation d'un polymère pour former un réseau tridimensionnel thermodurci. On obtient alors un élastomère sous forme solide. Il entre dans les compétences de l'homme du métier de déterminer les conditions de temps et de température à appliquer pour obtenir un tel réseau tridimensionnel thermodurci, en fonction du monomère et du polyol particuliers utilisés et du degré de réticulation souhaité pour l'élastomère. Les propriétés élastiques et thermomécaniques de cet élastomère sont avantageusement modulables en fonction du taux initial de polyol dans le milieu réactionnel.

En outre, l'application d'une pression réduite pendant au moins la phase initiale de l'étape de chauffage assure l'élimination de l'eau produite lors de la réaction de polymérisation, au fur et à mesure de sa formation, ce qui permet avantageusement de déplacer l'équilibre thermodynamique de cette réaction vers la formation d'un ester et d'augmenter la cinétique de réaction. Il a également été constaté par les présents inventeurs que, de manière surprenante, le niveau de pression appliquée lors de la phase initiale de l'étape de chauffage influe sur le nombre et la nature de fonctions hydroxyle du monomère et du polyol qui sont estérifiées au cours de la réaction, et par voie de conséquence sur les propriétés d'élasticité caoutchoutique de l'élastomère formé à l'issue du procédé selon l'invention. Par le réglage de la pression appliquée lors de la phase initiale de l'étape de chauffage il est ainsi possible de moduler ces propriétés de manière contrôlée.

Selon l'invention, au moins la phase initiale de l'étape de chauffage est réalisée à une pression comprise entre 0 et 900 mbar.

La pression appliquée pendant au moins la phase initiale de l'étape de chauffage est de préférence comprise entre 400 et 800 mbar. Il a été découvert par les présents inventeurs que, de manière tout à fait surprenante, les propriétés thermomécaniques, en particulier le module de conservation (réponse élastique du matériau en analyse mécanique dynamique (DMA)) et la densité de réticulation apparente, des polymères obtenus par application d'une pression dans cette plage de valeurs, sont particulièrement stables. Une telle caractéristique permet ainsi un très bon contrôle de la structure et du maillage du polymère, ainsi que de son degré de cristallinité, en permettant notamment le contrôle de la teneur en polyol estérifié au sein du polymère. L'application d'une pression dans la plage de 400 à 800 mbar pendant la phase initiale de l'étape de chauffage permet non seulement d'augmenter la vitesse de la réaction de

polymérisation, mais également de minimiser la quantité de polyol non réticulé.

La durée de la phase initiale de l'étape de chauffage correspond de préférence sensiblement à la durée nécessaire pour, dans les conditions opératoires mises en oeuvre, atteindre le point de gel du polymère qui se forme dans le milieu réactionnel. Cette durée dépend notamment de la température de chauffage et de la concentration de polyol dans le milieu réactionnel, pour une concentration du monomère donnée.

De manière classique en elle-même, comme pour tout procédé conduisant à la formation d'un réseau polymère réticulé chimiquement, le point de gel est ici défini comme le moment où un réseau tridimensionnel solide apparait dans le milieu réactionnel liquide. Le temps de gel correspond à l'intervalle de temps entre le début de la réaction et le moment où le point de gel est atteint dans le milieu réactionnel. L'apparition de ce réseau solide entraîne une divergence de la viscosité en écoulement, qui tend vers l'infini au temps de gel. Par ailleurs, ce réseau solide est par nature insoluble dans les solvants. Il est donc possible de détecter son apparition, c'est-à-dire l'occurrence du point de gel, par un test de solubilité dans un solvant capable de solubiliser les composants du milieu réactionnel initial.

Il est du ressort de l'homme du métier de déterminer, pour chaque ensemble de conditions opératoires spécifiques du procédé de préparation d'un polymère selon l'invention, le temps de gel nécessaire pour parvenir à ce point de gel. A cet effet, l'homme du métier pourra notamment procéder de manière empirique, par exemple par des essais de solubilisation du milieu réactionnel après différents temps de réaction, dans un solvant capable de solubiliser le milieu réactionnel initial. Le temps de gel sera alors compris entre le plus court temps de réaction conduisant à l'observation d'une fraction insoluble dans le solvant utilisé pour le test de solubilité, et le plus long temps de réaction pour lequel le milieu réactionnel reste totalement soluble en présence de ce solvant. A titre d'exemple, après différents temps de réaction, un échantillon de 10 mg de milieu réactionnel peut être ainsi incorporé dans 1 ml de solvant, par exemple d'éthanol. Après 5 minutes de vortexage, on observe l'apparition éventuelle d'une fraction insoluble dans le mélange, qui témoigne du fait que le point de gel a été atteint, et le temps de gel dépassé. Un tel test de solubilité peut être effectué à intervalles très rapprochés, par exemple toutes les 10 secondes, afin de déterminer le temps de gel de manière la plus précise possible. Ce test de solubilité peut être réalisé sur un milieu réactionnel témoin, notamment de faible volume, afin de déterminer le temps de gel du polymère dans les conditions opératoires qui seront en suite appliquées pour la mise en oeuvre du procédé selon l'invention proprement dit.

Préférentiellement, la durée de la phase initiale est comprise entre 30 min et 5 heures, de préférence comprise entre 1 h et 3 h.

Le procédé selon l'invention peut aussi bien mettre en oeuvre un seul monomère choisi parmi les acides gras polyhydroxylés et les esters d'un acide gras polyhydroxylé et d'un alcool à chaine aliphatique linéaire ou ramifiée, saturée ou insaturée, éventuellement substituée, comportant de 1 à 18 atomes de carbone, ou une pluralité de tels monomères.

On inclut par ailleurs dans la présente description, dans le terme « polyol », aussi bien un polyol unique qu'un mélange de polyols.

Préférentiellement, le milieu réactionnel contient moins de 10% en poids de composant(s) autre(s) que le polyol et le ou les monomères choisi(s) parmi les acides gras polyhydroxylés et les esters d'un acide gras polyhydroxylé et d'un alcool à chaine aliphatique linéaire ou ramifiée, saturée ou insaturée, éventuellement substituée, comportant de 1 à 18 atomes de carbone. Ainsi, le mélange du polyol et du ou des monomères représente de préférence au moins 90 % en poids du milieu réactionnel.

Le procédé selon l'invention peut en outre répondre à l'une ou plusieurs des caractéristiques décrites ci-après, mises en oeuvre isolément ou en chacune de leurs combinaisons techniquement opérantes.

Le polyol mis en oeuvre peut contenir une ou plusieurs fonctions acides, ou ne pas contenir de fonction acide. Préférentiellement, il ne s'agit pas d'un acide gras hydroxylé, et en particulier pas d'un acide gras polyhydroxylé ou d'un acide gras $\omega$-hydroxylé.

Dans des modes de mise en oeuvre particulièrement préférés de l'invention, le polyol est un triol ou comprend un triol. Il s'agit préférentiellement du glycérol, qui peut être utilisé seul ou en mélange avec un ou plusieurs autres polyols, notamment un ou plusieurs autres triols.

Le glycérol présente notamment les avantages d'une origine biosourcée et d'une absence de toxicité pour les êtres vivants. En outre, le glycérol est le principal déchet de la production du biocarburant, si bien que le procédé selon l'invention peut alors s'inscrire dans le cadre de la valorisation des déchets de l'agriculture et de l'industrie.

Dans des modes de mise en oeuvre particuliers de l'invention, le milieu réactionnel contient une concentration comprise entre 1 à 25 % en poids de polyol, par rapport au poids total du milieu réactionnel. Une telle plage de concentration permet avantageusement d'obtenir, avec une bonne cinétique de réaction, en un temps ne dépassant pas environ 50 heures, un polymère présentant des propriétés d'élasticité caoutchoutique, dont le degré est modulable en fonction de la concentration exacte en polyol dans le milieu réactionnel, permettant ainsi d'adapter finement ces propriétés de la manière la plus adéquate possible à l'application visée.

Dans cette gamme de concentration, plus de 85 % en poids, et même dans la plupart des configurations plus de 90 % en poids, du polyol présent dans le polymère est impliqué dans le réseau de réticulation du polymère formé. On entend par là que plus de 85 % en poids, et le plus souvent plus de 90 % en poids, du polyol présent dans le polymère

est impliqué dans une liaison ester, par au moins une de ses fonctions hydroxyle, au sein du polymère. Les autres molécules de polyol, non impliquées dans des liaisons covalentes au sein du polymère, jouent un rôle de plastifiant pour ce dernier.

Dans des modes de mise en oeuvre particuliers de l'invention, le milieu réactionnel contient 15 à 25 % en poids du polyol, par rapport au poids total du milieu réactionnel. Il a été découvert par les présents inventeurs que, de manière tout à fait surprenante, une telle plage de concentration du polyol permet de former un polymère présentant des zones cristallines, l'état cristallin du polymère étant d'autant plus élevé que la concentration initiale en polyol est elle-même élevée. La présence de telles zones cristallines rend le polymère formé par le procédé selon l'invention particulièrement intéressant pour des nombreuses applications.

En outre, de manière tout à fait avantageuse, le module de conservation (réponse élastique en analyse mécanique dynamique (DMA)) des polymères formés par le procédé selon l'invention, mesuré à 50 °C, varie peu dans la plage de 15 à 25 % en poids de polyol. Ce module de conservation correspond alors au module d'élasticité à faible déformation des matériaux. A une température de 50 °C, les matériaux ont un comportement de type caoutchoutique avec un module d'élasticité de l'ordre du mégapascal. L'application de la théorie de Flory sur l'élasticité caoutchoutique permet alors d'estimer la densité de réticulation apparente du réseau élastomère, qui est proportionnelle au module d'élasticité, et qui est donc également avantageusement quasi constante dans la plage de 15 à 25 % en poids de polyol dans le milieu réactionnel initial.

L'acide gras polyhydroxylé mis en oeuvre dans le procédé selon l'invention peut être linéaire ou ramifié, c'est-à-dire consister en un acide carboxylique à chaine aliphatique linéaire ou ramifiée portant plusieurs fonctions hydroxyles, dont une au moins est située en position terminale de ladite chaine. L'acide gras polyhydroxylé mis en oeuvre selon l'invention peut notamment répondre à la formule générale (I) :

$$(HO)C_nH_{2n-m-2p}(OH)_mCOOH \qquad (I)$$

dans laquelle :

n est un nombre entier compris entre 7 et 21, de préférence entre 12 et 20, de préférence encore entre 13 et 19, préférentiellement entre 15 et 17,
m est un nombre entier supérieur à 0, de préférence compris entre 1 et 3, et préférentiellement égal à 1,
p représente le nombre d'insaturations contenues dans ledit acide gras et est un nombre entier compris entre 0 et 3, de préférence égal à 0.

Les esters d'acide gras polyhydroxylé pouvant être mis en oeuvre selon l'invention peuvent notamment répondre à la formule générale (II) :

$$(HO)C_nH_{2n-m-2p}(OH)_mCOOR \qquad (II)$$

dans laquelle :

n, m et p sont comme définis précédemment,
et R représente une chaine aliphatique linéaire ou ramifiée, saturée ou insaturée, éventuellement substituée, comportant de 1 à 18 atomes de carbone, de préférence de 1 à 6 atomes de carbone, préférentiellement un radical méthyle ou un radical éthyle.

On entend dans la présente description, par chaine aliphatique, une chaine carbonée ouverte non-aromatique.

Préférentiellement, le monomère est un ester méthylique ou éthylique d'un acide gras polyhydroxylé.

Des caractéristiques préférentielles des acides gras polyhydroxylés pouvant être mis en oeuvre dans le procédé selon l'invention sont exposées de manière détaillées ci-après. Les mêmes caractéristiques sont transposables à l'identique aux esters d'un acide gras polyhydroxylé et d'un alcool à chaine aliphatique linéaire ou ramifiée, saturée ou insaturée, éventuellement substituée, comportant de 1 à 18 atomes de carbone.

Préférentiellement, un acide gras polyhydroxylé mis en oeuvre en tant que monomère dans le procédé selon l'invention est un acide gras dihydroxylé, c'est-à-dire dont la chaine carbonée porte deux groupements hydroxyles, dont l'un est situé en bout de chaîne. L'acide gras polyhydroxylé porte préférentiellement une seule fonction acide.

Ainsi, dans des modes de mise en oeuvre particuliers de l'invention, un monomère mis en oeuvre dans le procédé est un acide gras dihydroxylé, de préférence à une seule fonction acide.

Des exemples d'acides gras polyhydroxylés pouvant être mis en oeuvre en tant que monomère dans le procédé selon l'invention sont, non limitativement, l'acide 10,16-dihydroxyhexadécanoïque, ou l'acide 9,10,18-trihydroxyoctadecanoïque.

Il s’agit de préférence de l’acide 10,16-dihydroxyhexadécanoïque, de formule (I’) ci-dessous :

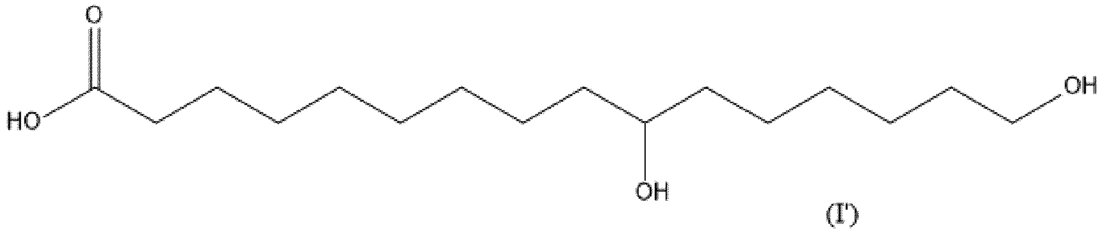

(I')

Des esters particulièrement adaptés à la mise en oeuvre du procédé selon l’invention sont les esters méthylique et éthylique de l’acide 10,16-dihydroxyhexadécanoïque.

Le ou les acides gras polyhydroxylés mis en oeuvre en tant que monomères dans le procédé selon l’invention peuvent être synthétisés par voie chimique. Ils peuvent autrement être extraits à partir de végétaux, plus particulièrement à partir de la cuticule des plantes, et plus précisément encore de la cutine, par méthode enzymatique ou par hydrolyse acide ou basique.

La cutine est un réseau polymère d’acides gras polyhydroxylés, pour la majorité en C16 et C18, réticulés par des liaisons ester, qui est impliqué dans l’imperméabilisation des feuilles et des fruits des plantes supérieures. Il s’agit du composant principal de la cuticule de la plante, la membrane lipidique continue extracellulaire qui couvre les parties aériennes de feuilles et de fruits des plantes.

Préférentiellement, le ou les acides gras polyhydroxylés mis en oeuvre en tant que monomères dans le procédé selon l’invention sont extraits de la tomate, qui présente l’avantage d’une grande homogénéité de constitution de la cutine d’une espèce à l’autre, cette cutine présentant en outre un monomère constitutif en quantité largement majoritaire : l’acide 10,16-dihydroxyhexadécanoïque, qui y est présent à plus de 80 % en poids.

Les déchets de transformation des tomates, nommés drèches de tomate, contiennent une quantité importante de cutine, plus précisément 60 à 70 % .de cutine. On estime à 4 à 5 millions de tonnes la quantité de drèches de tomates produites chaque année dans le monde. Ainsi, le procédé selon l’invention peut tout à fait avantageusement permettre de valoriser les déchets agricoles et industriels que constituent les drèches de tomate, ce qui s’avère d’un grand intérêt tant du point de vue environnemental qu’économique.

Dans des modes de mise en oeuvre particuliers de l’invention, un monomère utilisé dans le procédé selon l’invention est obtenu par dépolymérisation de cutine, de préférence de cutine de tomate.

Autrement, le ou les acides gras polyhydroxylés mis en oeuvre en tant que monomères dans le procédé selon l’invention peuvent être extraits à partir d’autres végétaux, tels que la pomme (*Malus pumila*), le bigaradier (*Citrus aurantium*), les fèves (*Vicia faba*), le merisier (*Prunus avium*), la canneberge (*Vaccinium macrocarpon*), le fruit de la vigne (*Vitis vinifera*), la graine des pois (*Pisum sativum*), les fruits des groseillers à maquereau (*Ribes grossularia*), la papaye (*Malabar papaiarnarum*), les feuilles d’agave (*Agave americana*), les graines de pamplemousse (*Citrus paradisi*), le citron (*Citrus limon*), le citron vert (*Citrus aurantifolia*), les fruits du papayer (*Carica papaya*), l’oignon (*Allium cepa*), les airelles (*Vaccinium vitis idaea*), les feuilles de caféier (*Rubiaceae coffea*), les fruits de l’églantier (*Rosa canina*), les courges (*Cucurbita pepo*), etc.

Tout procédé d’extraction de la cutine des végétaux, notamment de fragmentation des drèches de tomate ou des peaux de tomate, et tout procédé de dépolymérisation de cette cutine, de sorte à obtenir le ou les acides gras polyhydroxylés utilisés en tant que monomère(s) dans le procédé, peuvent être mis en oeuvre selon l’invention. Schématiquement, ces méthodes comprennent la fragmentation des drèches de tomate, ou autres éléments végétaux, tels que la pomme, pour en extraire la cutine, puis l’hydrolyse de la cutine pour en obtenir les monomères constitutifs. Après isolation, par des méthodes de séparation physique ou par extraction liquide-liquide, la cutine est ainsi hydrolysée chimiquement, en particulier par voie alcaline en milieu organique, ou à l’aide d’enzymes spécifiques, notamment des cutinases.

Un exemple de méthode pouvant être mise en oeuvre à cet effet est décrite dans le document WO 2015/028299. Cette méthode comprend, schématiquement, le traitement thermique de peaux de tomate, puis leur introduction dans une solution alcaline, par exemple d’hydroxyde de potassium à une concentration entre 0,5 M et 6 M, à une température comprise entre 20 °C et 130 °C, par exemple entre 65°C et 130°C. La solution est ensuite filtrée, puis acidifiée, notamment avec de l’acide chlorhydrique à une concentration comprise entre 12 M et 6 M. Après centrifugation, par exemple à 10 000 à 14 000 tr/min pendant 15 à 20 minutes, le culot est lavé, par exemple à l’eau déminéralisée, puis le cas échéant séché.

Une méthode préférée selon l’invention consiste, après une étape de décantation de drèches de tomate pour récupérer les peaux, et le séchage, le broyage et la délipidation des peaux ainsi récupérées, à les hydrolyser en milieu alcalin dans un solvant alcoolique. A titre d’exemple, une telle hydrolyse peut être réalisée par immersion des peaux

délipidées et déshydratées dans de la potasse alcoolique (par exemple formée de 5 % de potasse dans l'éthanol anhydre), à 50 °C, pendant 6 heures à 5 jours, de préférence pendant 2 jours. Le mélange peut ensuite être filtré sous vide, et l'éthanol éliminé grâce à un évaporateur rotatif. Les acides gras contenus dans la composition obtenue peuvent être précipités, notamment dans l'eau à pH entre 2 et 3, par exemple dans une solution d'acide chlorhydrique à 37 %, puis récupérés, notamment par centrifugation, par exemple à 9000 tr/min pendant 20 minutes. Après rinçage(s) du culot obtenu à l'eau déminéralisée et lyophilisation, on obtient, avec un rendement compris entre 60 et 70 %, une composition huileuse contenant essentiellement des acides gras, dont très majoritairement de l'acide 10,16-dihydroxyhexadécanoïque.

Plus précisément, cette composition huileuse obtenue à l'issue des opérations de dépolymérisation de la cutine contient au moins 85 % en poids d'acides gras. L'acide 10,16-dihydroxyhexadécanoïque y représente de préférence au moins 88% en poids de ces acides gras. Cette composition, qui contient également des composés phénoliques et caroténoïdes absorbant à 380, 288 et 225 nm, ainsi que d'autres substances en faibles quantités, en particulier des composés phénoliques dans une concentration d'environ 0,5 à 3 % en poids, peut avantageusement être directement mise en oeuvre dans le procédé selon l'invention.

L'ester d'acide gras polyhydroxylé pouvant être mis en oeuvre selon l'invention peut quant à lui être préparé par estérification de l'acide gras correspondant selon toute méthode classique en elle-même pour l'homme du métier, sans catalyse ou de préférence avec catalyse acide. Il peut autrement être obtenu par transestérification des acides gras polyhydroxylés contenus dans les cutines de végétaux, de préférence opérée en catalyse acide ou en catalyse basique, à l'aide d'une base forte ou d'alcoolates comme le méthanolate de sodium ou l'éthanolate de sodium. L'alcool utilisé pour réaliser la réaction d'estérification ou de transestérification de l'acide gras comporte de préférence de 1 à 18 atomes de carbone et préférentiellement de 1 à 8 atomes de carbone. Il est de préférence choisi parmi le méthanol, l'éthanol, le propanol, le butanol, le pentanol, l'hexanol et ses isomères dont le 2-éthyl-butanol, l'heptanol et ses isomères comme le 2-heptanol, l'octanol et ses isomères comme le 2-éthyl-hexanol, et aussi l'isopropanol, le 2 méthyl-propanol, le 2 méthyl-propane-2-ol, le butan-2-ol, les alcools amyliques, le 2-methyl-butanol, le 3-methyl-butanol, le 2,2 diméthylpropanol, le pentan-3-ol, le pentan-2-ol, le 3-méthylbutan-2-ol, le 2-méthylbutan-2-ol, les alcools de guerbet comme le 2-propyl-heptanol, le 2 butyl-octanol.

A titre d'exemple, un ester d'acide gras polyhydroxylé pouvant être mis en oeuvre dans le procédé selon l'invention peut être directement produit à partir de peaux de tomates, par mise en contact de ces peaux avec de l'alcool, en particulier du méthanol ou de l'éthanol, en présence d'un acide, par exemple de 2 à 5 % d'acide sulfurique concentré, à une température comprise entre 50 et 70 °C pendant au moins 6 heures. Les esters obtenus à l'issue de la réaction de transestérification peuvent être purifiés par addition d'eau dans le milieu réactionnel puis centrifugation.

Dans des modes de mise en oeuvre particuliers de l'invention, la préparation du milieu réactionnel comprend le mélange d'un polyol avec une composition issue de la dépolymérisation de cutine, de préférence de cutine de tomate ou de cutine de pomme. Cette composition, qui est préférentiellement riche en acides gras dihydroxylés, contient de préférence au moins 20 %, de préférence au moins 80 %, en poids du monomère par rapport au poids total d'acides gras hydroxylés contenus dans la composition. Le monomère peut y être présent sous forme d'acide ou sous forme d'ester, selon le mode opératoire qui a été utilisé pour réaliser la dépolymérisation de la cutine.

Dans des modes de mise en oeuvre particuliers de l'invention, cette composition issue de la dépolymérisation de cutine contient de préférence au moins 20 %, de préférence au moins 80 %, en poids du monomère par rapport au poids total de la composition.

Le monomère y est préférentiellement un acide gras dihydroxylé. Préférentiellement, le milieu réactionnel est constitué sensiblement uniquement d'une telle composition et du polyol.

Ce milieu réactionnel, et l'élastomère qu'il permet de former, sont de préférence entièrement biosourcés.

Dans des modes de mise en oeuvre particuliers de l'invention, le rapport molaire entre le polyol, notamment le glycérol, et le(s) monomère(s) ou la composition issue de la polymérisation de la cutine dans le milieu réactionnel, est compris entre 0,16 et 1,04. Lorsque le monomère est contenu dans une composition issue de la dépolymérisation de la cutine, ce rapport s'applique entre le polyol, notamment le glycérol, et cette composition, dont on détermine alors le nombre de moles en assimilant sa masse molaire à celle de l'acide 10,16-dihydroxyhexadécanoïque.

L'étape de préparation du milieu réactionnel du procédé selon l'invention est de préférence réalisée à une température supérieure ou égale à 50 °C. Une telle caractéristique facilite avantageusement un mélange homogène du monomère et du polyol, et d'autant plus lorsque le milieu réactionnel est exempt de solvant.

Les conditions opératoires mise en oeuvre lors de l'étape de chauffage sont de préférence choisies pour ne pas provoquer l'évaporation du polyol présent dans le milieu réactionnel.

Dans des modes de mise en oeuvre particuliers de l'invention, l'étape de chauffage est réalisée dans un intervalle de température compris entre 120 et 200°C, notamment à une température d'environ 150°C. La température appliquée lors de la phase initiale de l'étape de chauffage, définie de préférence comme la phase se déroulant avant que ne soit atteint le point de gel du polymère, peut être identique, ou différente, par rapport à la température appliquée lors de la deuxième phase de l'étape de chauffage, qui est définie comme la phase se déroulant après la phase initiale,

jusqu'au terme de l'étape de chauffage.

L'étape de chauffage est de préférence réalisée pendant une durée d'au moins 4 heures, de préférence comprise entre 4 et 60 heures et préférentiellement comprise entre 5 et 28 heures, par exemple entre 22 et 28 heures.

En particulier, la phase initiale de l'étape de chauffage peut être réalisée pendant une durée de préférence comprise entre 30 et 5 heures, préférentiellement comprise entre 1 et 3 heures, notamment une durée d'environ 90 minutes.

Comme exposé ci-avant, la phase initiale de l'étape de chauffage est réalisée à une pression comprise entre 0 et 900 mbar, de préférence comprise entre 100 et 900 mbar, et préférentiellement comprise entre 400 et 800 mbar. Une telle caractéristique favorise non seulement l'évaporation de l'eau formée hors du milieu réactionnel, et de ce fait la cinétique de la réaction d'estérification du polyol par l'acide gras ω-hydroxylé, mais elle permet aussi, de manière tout à fait surprenante, de maximiser les pourcentages en poids de monomère et de polyol estérifiés, c'est-à-dire impliqués dans une liaison ester au sein du polymère formé, ainsi que les propriétés d'élasticité de ce polymère. En particulier, la mise en oeuvre d'une pression inférieure à 100 mbar provoque l'évaporation de polyol, notamment de glycérol, hors du milieu réactionnel, et résulte en la formation d'un polymère dont les propriétés d'élasticité caoutchoutique sont moins satisfaisantes que lorsque la pression appliquée est supérieure ou égale à 200 mbar ; et la mise en oeuvre d'une pression supérieure à 900 mbar diminue les taux d'estérification du polyol et du monomère en présence. Au sein de la plage de 0 à 900 mbar, de manière générale, on observe que plus la pression appliquée est basse, plus le taux de fonctions hydroxyle libres dans le polymère formé par le procédé selon l'invention est faible, ce dont il est possible de facilement s'assurer par analyse du polymère formé par spectroscopie infrarouge, par observation de la bande correspondant aux groupes hydroxyle libres, à 3500 $cm^{-1}$. En outre, concernant la nature de ces fonctions hydroxyle libres, lorsque la pression réduite appliquée est dans la fourchette de valeurs préférentielle préconisée par l'invention, dans les cas où le monomère est un acide gras dihydroxylé, la proportion relative dans le polymère de fragments du monomère dans lequel les fonctions hydroxyle sont toutes estérifiées n'excède pas 80 %, et de préférence 70 %. Il a été découvert par les présents inventeurs que plus la proportion relative dans le polymère de fragments de l'acide gras dans lesquels les fonctions hydroxyle sont toutes estérifiées est élevée, moins bonnes sont les propriétés caoutchoutiques de ce dernier. En outre, la proportion relative de fragments du monomère dans lesquels il subsiste des fonctions hydroxyle secondaires libres est inférieure ou égale à 40 %, ce qui s'avère également avantageux du point de vue des propriétés d'élasticité du polymère.

Préférentiellement, le procédé selon l'invention comprend, pendant l'étape de chauffage, avant que le point de gel dudit polymère ait été atteint, une étape d'élimination des bulles présentes dans le milieu réactionnel. Cette étape peut être réalisée par tout moyen, par exemple par agitation, manuelle ou automatique, du milieu réactionnel. Elle peut être mise en oeuvre de manière continue, notamment pendant toute la durée de la phase initiale de l'étape de chauffage, ou bien être réalisée ponctuellement, à une ou plusieurs reprises lors de l'étape de chauffage, et dans ce cas préférentiellement au moins une fois juste avant, par exemple 1 à 5 minutes avant, que le point de gel du polymère ait été atteint. Dans un mode de mise en oeuvre particulier de l'invention, l'étape d'élimination des bulles présentes dans le milieu réactionnel comprend au moins une phase d'agitation du milieu réactionnel juste avant que le polymère présent dans le milieu réactionnel ait atteint son point de gel, par exemple lorsqu'est atteint le plus long temps de réaction pour lequel le milieu réactionnel reste totalement soluble en présence du solvant dans le test de solubilité décrit ci-avant.

Le chauffage du milieu réactionnel peut optionnellement être interrompu pendant une phase d'agitation ponctuelle du milieu réactionnel visant à en éliminer les bulles qui s'y sont formées.

La deuxième phase de l'étape de chauffage peut quant à elle être réalisée pendant une durée adéquate pour obtenir le degré de réticulation souhaité pour l'élastomère. Cette durée est préférentiellement d'au moins 4 heures, et de préférence comprise entre 4 et 48 heures, par exemple d'environ 24 heures. Aucun réactif ni autre substance n'est de préférence ajouté dans le milieu réactionnel avant ou pendant la deuxième phase de l'étape de chauffage. Préférentiellement, les conditions opératoires mises en oeuvre lors de l'étape de chauffage sont choisies pour obtenir un taux de réticulation du polymère supérieur ou égal à 50 %, notamment compris entre 50 et 90 %.

Le procédé selon l'invention permet avantageusement de former un élastomère dont les propriétés, notamment d'élasticité, et la température de transition vitreuse, sont modulables en fonction notamment du taux de polyol, préférentiellement de glycérol, mis en oeuvre, le glycérol jouant notamment, dans ce polymère, à la fois le rôle de monomère constitutif du polymère que de plastifiant, et en fonction de la valeur de pression réduite appliquée lors de l'étape de chauffage et de la durée d'application de cette pression réduite.

Selon un deuxième aspect, l'invention concerne un polymère, de type polyester, hydrophobe, susceptible d'être obtenu par un procédé selon l'invention.

Un motif monomère de ce polymère est un acide gras polyhydroxylé.

Ce polymère peut notamment être formé à partir d'au moins un polyol et d'au moins un acide gras polyhydroxylé, ou d'un ester d'un tel acide gras tel que défini ci-avant, notamment à base de glycérol et d'acide 10,16-dihydroxyhexadécanoïque, et le cas échéant d'autres monomères.

Il présente une élasticité caoutchoutique qui varie en fonction du taux de polyol, notamment de glycérol, entrant

dans sa constitution. Ce polymère, qui peut être qualifié d'élastomère, est notamment d'autant plus élastique qu'il contient plus de polyol, notamment de glycérol.

Sa température de transition vitreuse peut varier entre -12,5 et -25°C, en fonction de sa teneur en polyol, notamment en glycérol. Cette température de transition vitreuse est mesurée par analyse enthalpique différentielle (AED ou calorimétrie différentielle à balayage (DSC pour Differential Scanning Calorimetry)), comprenant l'application d'un balayage en température à un échantillon de polymère, d'une température de -50 °C jusqu'à une température de 80 °C avec une rampe de montée en température de 3 °C/min. Cette analyse est de préférence réalisée sur une quantité de polymère de 10 mg, placée dans une capsule hermétique en aluminium.

Le polymère selon l'invention présente un très haut poids moléculaire, et un taux de réticulation compris entre 50 et 90 %. Ce taux de réticulation, qui est défini comme le taux de fonctions hydroxyles du monomère qui sont engagées dans une liaison ester au sein du polymère, peut être déterminé de toute manière classique en elle-même, notamment par marquage des fonctions hydroxyle libres du polymère. En d'autres termes, le polymère selon l'invention est tel que le taux de fonctions hydroxyles portées par le motif monomère, qui sont libres, est compris entre 10 et 50 %. Ce taux de fonctions hydroxyle libres peut être déterminé de toute manière classique en elle-même pour l'homme du métier. A titre d'exemple, il peut être déterminé par marquage chimique des fonctions hydroxyle libres au sein du polymère, ce marquage résistant aux procédés de dépolymérisation du polymère, par exemple par benzylétherification, comme décrit dans la publication de Philippe et al., 2016, Plant Physiology, DOI:10.1104/pp.15.01620) ; puis dépolymérisation et mesure des proportions respectives, dans les monomères ainsi libérés, des fonctions hydroxyles marquées, qui n'étaient donc pas impliquées dans des liaisons covalentes dans le polymère, et des fonctions hydroxyles non marquées, qui étaient donc impliquées dans des liaisons covalentes dans le polymère.

Ce polymère est insoluble dans la plupart des solvants, notamment dans l'eau, l'éthanol, le méthanol, l'isopropanol, le chloroforme, le dichlorométhane, le diméthylsulfoxyde et le tétrahydrofurane, ou l'un quelconque de leurs mélanges. Il se différencie en cela des polymères dendritiques, qui sont quant à eux solubles dans de nombreux solvants. On entend dans la présente description, par le terme « insoluble », le fait que le pourcentage en poids de polymère non solubilisé dans un volume de solvant dans lequel il est immergé, après agitation pendant 18 heures à température ambiante, est supérieur à 85 %.

Un exemple d'architecture de ce polymère est montré sur la figure 1, pour le cas où le monomère est de l'acide 10,16-dihydroxyhexadécanoïque et le polyol est le glycérol. Ce polymère comporte des fragments de l'acide gras dihydroxylé dans lesquels les fonctions hydroxyle sont toutes deux estérifiées, des fragments dans lesquels il subsiste des fonction hydroxyle primaires libres, et des fragments dans lesquels il reste des fonctions hydroxyle secondaires libres.

La proportion relative de chacun de ces fragments dans le polymère peut être déterminée de toute manière classique en elle-même. Par exemple, il peut être appliqué la méthode décrite dans la publication de Philippe et al., dans Plant Physiology, 2016, 170, 807-820. De manière succincte, cette méthode consiste à marquer les fonctions hydroxyle libres du polymère, à réaliser sa dépolymérisation, à séparer les fragments monomères obtenus et à les analyser pour évaluer la présence et le type de fonctions hydroxyle marquées. A titre d'exemple de protocole expérimental pouvant être appliqué, 5 mg de polymère sont mélangés dans un tube en verre bouché pendant 24 h avec 50 mg de 2-benzyloxy-1-methylpyridinium triflate et 6 mg d'oxyde de magnésium dans 1 ml de tri-fluorotoluène à 90 °C. Le polymère est ensuite rincé au dichlorométhane et séché. Le polymère marqué est ensuite dépolymérisé à l'aide d'une base faible, telle que le méthanolate de sodium à 0,5 M, dans le méthanol anhydre. Cette dépolymérisation peut être effectuée pendant 16 h à 60 °C. Un aliquote de cette fraction est prélevé et injecté pour analyse en chromatographie en phase gazeuse couplée à la spectrométrie de masse (GC-MS) après silylation.

Préférentiellement, la proportion relative dans le polymère de fragments de l'acide gras dans lequel les fonctions hydroxyle sont toutes deux estérifiées n'excède pas 80 %, et de préférence 70 %. Il a été découvert par les présents inventeurs que plus la proportion relative de fragments de l'acide gras dans lequel les fonctions hydroxyle sont toutes deux estérifiées, dans le polymère, est élevée, et moins bonnes sont les propriétés caoutchoutiques de ce dernier. Une proportion relative supérieure à 80 %, qui est indicative de la présence au sein du polymère d'une quantité importante de chaines branchées, est associée à des propriétés caoutchoutiques insuffisantes, et en particulier à une très faible capacité d'étirement du polymère.

Le polymère selon l'invention est préférentiellement issu de matières premières de recyclage, et est lui-même recyclable.

Ce polymère, du fait de la modularité de ses propriétés, peut être utilisé pour des applications multiples et variées.

Dans des modes de réalisation particuliers de l'invention, le polymère présente au moins une, de préférence plusieurs, des caractéristiques ci-après :

- il présente des zones cristallines,
- il présente une température de fusion supérieure ou égale à 40 °C, plus particulièrement comprise entre 40 °C et 42 °C,

- il présente un module de conservation (réponse élastique en analyse mécanique dynamique) à 50 °C compris entre 1,4 et 1,6 MPa,
- il présente une température de relaxation mécanique inférieure à 2 °C,
- il présente un module de Young compris entre 1,10 et 1,20 MPa,
- il présente une contrainte de rupture comprise entre 1,2 et 1,6 MPa.

Le polymère présente en outre un allongement à la rupture supérieur à 100 %, et même supérieur à 150 %.

Les caractéristiques et avantages de l'invention apparaîtront plus clairement à la lumière des exemples de mise en oeuvre ci-après, fournis à simple titre illustratif et nullement limitatifs de l'invention, avec l'appui des figures 1 à 25, dans lesquelles :

La figure 1 montre un exemple d'architecture d'un polymère selon l'invention, obtenu à partir de glycérol et d'acide 10,16-dihydroxyhexadécanoïque.

La figure 2 représente un graphe montrant le pourcentage en poids, par rapport au poids initial de glycérol dans le milieu réactionnel, de glycérol estérifié à l'issue de la mise en oeuvre d'un procédé selon l'invention de préparation d'un polymère à partir de glycérol et d'une composition huileuse extraite de cutine de tomate, en fonction de la teneur massique initiale de glycérol dans le milieu réactionnel.

La figure 3 représente un graphe montrant le pourcentage en poids, par rapport au poids initial d'acides gras dans le milieu réactionnel, d'acides gras estérifiés à l'issue de la mise en oeuvre d'un procédé selon l'invention de préparation d'un polymère à partir de glycérol et d'une composition huileuse extraite de cutine de tomate, en fonction la teneur massique initiale de glycérol dans le milieu réactionnel.

La figure 4 montre les spectres obtenus par spectroscopie infrarouge par transformée de Fourier, respectivement pour un polymère préparé par un procédé selon l'invention, à partir de glycérol et d'une composition huileuse extraite de cutine de tomate, avec une teneur massique initiale de glycérol de 25 % (« PG25% »), une pression de 400 mbar ayant été appliquée lors de la phase initiale de l'étape de chauffage ; et pour cette composition huileuse extraite de cutine de tomate (« CH »).

La figure 5 montre un agrandissement d'une zone des spectres de la figure 4.

La figure 6 montre un agrandissement d'une zone des spectres obtenus par spectroscopie infrarouge par transformée de Fourier, pour des polymères préparés par des procédés selon l'invention, à partir de glycérol et d'une composition huileuse extraite de cutine de tomate, avec une teneur massique initiale de glycérol de 15 %, des pressions respectives de 0, 200, 400, 600, 800 et 1000 mbar ayant été appliquées lors de la phase initiale de l'étape de chauffage.

La figure 7 représente un graphe en barres montrant, pour un polymère comparatif sans glycérol (« PG0% ») et pour des polymères préparés par des procédés conformes à l'invention à partir de glycérol et d'une composition huileuse extraite de cutine de tomate, avec des teneurs massiques initiales de glycérol respectivement de 5 à 25 % (« PG5% » à « PG25% »), une pression de 400 mbar ayant été appliquée lors de la phase initiale de l'étape de chauffage, les proportions relatives dans les polymères des fragments issus de l'acide 10,16-dihydroxyhexadécanoïque entièrement estérifiés (IIIa), estérifiés sur la fonction hydroxyle primaire seulement (IIIc) et estérifiés sur la fonction hydroxyle secondaire seulement (IIIb).

La figure 8 représente un graphe en barres montrant, pour des polymères préparés par des procédés conformes à l'invention à partir de glycérol et d'une composition huileuse extraite de cutine de tomate, avec une teneur massique initiale de glycérol de 15 %, des pressions respectives de 0, 200, 400, 600, 800 et 1000 mbar ayant été appliquées lors de la phase initiale de l'étape de chauffage, les proportions relatives dans les polymères des fragments issus de l'acide 10,16-dihydroxyhexadécanoïque entièrement estérifiés (IIIa), estérifiés sur la fonction hydroxyle primaire seulement (IIIc) et estérifiés sur la fonction hydroxyle secondaire seulement (IIIb).

La figure 9 représente un graphe en barres montrant, pour des polymères préparés par des procédés conformes à l'invention à partir de glycérol et d'une composition huileuse extraite de cutine de tomate, avec des teneurs massiques initiales de glycérol respectivement de 5 à 25 % (« PG5% » à « PG25% »), une pression de 400 mbar ayant été appliquée lors de la phase initiale de l'étape de chauffage, les proportions relatives dans les polymères des fragments issus du glycérol entièrement estérifiés (IVa), estérifiés sur les fonctions hydroxyle en position 1 ou 3 seulement (IVb) et estérifiés sur la fonction hydroxyle en position 2 seulement (IVc).

La figure 10 représente un graphe montrant les températures de transition vitreuse, mesurées par DSC, de polymères préparés par des procédés conformes à l'invention, à partir de glycérol et d'une composition huileuse extraite de cutine de tomate, en fonction de la teneur massique initiale de glycérol dans le milieu réactionnel, une pression de 400 mbar ayant été appliquée lors de la phase initiale de l'étape de chauffage.

La figure 11 représente un graphe montrant les températures de relaxation mécanique, mesurées par DMA, de polymères préparés par des procédés conformes à l'invention, à partir de glycérol et d'une composition huileuse extraite de cutine de tomate, en fonction de la teneur massique initiale de glycérol dans le milieu réactionnel, une pression de 400 mbar ayant été appliquée lors de la phase initiale de l'étape de chauffage.

La figure 12 montre la forme et les dimensions des éprouvettes utilisées pour les essais en traction visant à déterminer les propriétés mécaniques de polymères selon l'invention.

La figure 13 montre le module de Young mesuré pour des éprouvettes formées en polymères selon l'invention en fonction de la teneur massique initiale du glycérol dans le milieu réactionnel, une pression de 400 mbar ayant été appliquée lors de la phase initiale de l'étape de chauffage.

La figure 14 montre la contrainte maximale à la rupture mesurée pour des éprouvettes formées en polymères selon l'invention en fonction de la teneur massique initiale du glycérol dans le milieu réactionnel, une pression de 400 mbar ayant été appliquée lors de la phase initiale de l'étape de chauffage.

La figure 15 montre le pourcentage de déformation à la rupture mesuré pour des éprouvettes formées en polymères selon l'invention en fonction de la teneur massique initiale du glycérol dans le milieu réactionnel, une pression de 400 mbar ayant été appliquée lors de la phase initiale de l'étape de chauffage.

La figure 16 montre la courbe obtenue par DSC pour un polymère préparé à partir d'une composition huileuse extraite de cutine de tomate, une pression de 400 mbar ayant été appliquée lors de la phase initiale de l'étape de chauffage.

La figure 17 montre la courbe obtenue par DSC pour un polymère préparé par un procédé selon l'invention à partir de glycérol et d'une composition huileuse extraite de cutine de tomate, avec une teneur massique initiale de glycérol de 15 %, une pression de 400 mbar ayant été appliquée lors de la phase initiale de l'étape de chauffage.

La figure 18 montre la courbe obtenue par DSC pour un polymère préparé par un procédé selon l'invention à partir de glycérol et d'une composition huileuse extraite de cutine de tomate, avec une teneur massique initiale de glycérol de 25 %, une pression de 400 mbar ayant été appliquée lors de la phase initiale de l'étape de chauffage.

La figure 19 montre le spectre DRX d'un polymère préparé à partir d'une composition huileuse extraite de cutine de tomate, une pression de 400 mbar ayant été appliquée lors de la phase initiale de l'étape de chauffage.

La figure 20 montre le spectre DRX d'un polymère préparé par un procédé selon l'invention à partir de glycérol et d'une composition huileuse extraite de cutine de tomate, avec une teneur massique initiale de glycérol de 25 %, une pression de 400 mbar ayant été appliquée lors de la phase initiale de l'étape de chauffage.

La figure 21 montre des spectres DRX obtenus pour des polymères préparés à partir d'une composition huileuse extraite de cutine de tomate et d'une teneur massique en glycérol dans le milieu réactionnel de 15 %, en appliquant une pression de 400 mbar conformément à l'invention, ou de 1000 mbar, pendant l'étape de chauffage.

La figure 22 montre des spectres DRX obtenus pour une composition huileuse extraite de cutine de tomate (en A/) et pour le polymère obtenu conformément à l'invention à partir de cette composition huileuse et de glycérol à une teneur massique de 20 %, une pression de 400 mbar ayant été appliquée lors de l'étape de chauffage (en B/).

La figure 23 montre un graphe représentant d'une part, le module de conservation à 50 °C, et d'autre part, la densité de réticulation apparente, en fonction de la teneur massique initiale de glycérol dans le milieu réactionnel, pour des polymères préparés par un procédé selon l'invention à partir de glycérol et d'une composition huileuse extraite de cutine de tomate, une pression de 400 mbar ayant été appliquée lors de la phase initiale de l'étape de chauffage.

La figure 24 montre un graphe représentant le rapport « module de conservation / module de conservation à pression atmosphérique » (ratio E'/Eatm), en fonction de la pression appliquée lors de l'étape de chauffage d'un procédé selon l'invention mettant en oeuvre du glycérol et une composition huileuse extraite de cutine de tomate, avec une teneur massique initiale de glycérol de 25 %.

La figure 25 montre les spectres obtenus par spectroscopie infrarouge par transformée de Fourier, respectivement pour un polymère préparé par un procédé selon l'invention, à partir de glycérol et d'une composition huileuse extraite de cutine de pomme, avec une teneur massique initiale de glycérol de 10 % (« PPG10%), une pression de 400 mbar ayant été appliquée lors de la phase initiale de l'étape de chauffage ; et pour cette composition huileuse extraite de cutine de pomme (« CHP »).

EXPERIENCE 1 - Cutine de tomate

Préparation d'une composition contenant un acide gras ω-hydroxylés à partir de drèches de tomate

Un procédé de préparation d'un élastomère conforme à l'invention est mis en oeuvre comme suit, à partir de glycérol et d'une composition huileuse extraite de cutine de tomate.

Des peaux de tomates sont isolées par décantation à partir de drèches de tomates. Ces peaux sont séchées, broyées et délipidées par reflux dans un extracteur de Soxhlet à l'aide d'un mélange acétone:éthanol (1:1) pendant 2 jours. Elles sont ensuite déshydratées.

200 g de peaux de tomate ainsi préalablement décirées et déshydratées sont mis en suspension dans 1 l d'une solution d'hydroxyde de potassium KOH à 5 % préparée dans l'éthanol anhydre. Le mélange est chauffé à 50°C pendant 16 h. La suspension est ensuite filtrée sous vide par passage à travers un fritté de taille A0 (160-250 μm), le volume d'éthanol est réduit par évaporation, puis le filtrat est dilué par de l'eau et acidifié jusqu'à pH 3-4 à l'aide d'une solution

d'acide chlorhydrique HCl à 37 %. La suspension ainsi formée est centrifugée à 8000 tr/min pendant 15 min à 20°C, puis le culot de centrifugation est récupéré, lavé à l'eau puis séché sous vide. 150 g d'une composition huileuse constituée principalement d'acides gras (pour plus de 85 % en poids), ainsi que de petites quantités de pigments non identifiés, dont des substances colorantes absorbant à 300, 288 et 225 nm, sont ainsi obtenus. Une analyse de cette composition par chromatographie en phase gazeuse couplée à la spectrométrie de masse GC-MS/FID montre que la fraction d'acides gras de cette composition huileuse comporte une teneur en acides gras $\omega$-hydroxylés de plus de 90 %. La composition centésimale massique de la fraction des acides gras de la composition huileuse ainsi obtenue est indiquée dans le tableau 1 ci-après.

Tableau 1

| Constituant | Teneur dans l'extrait (%) |
|---|---|
| Acide p-coumarique | 0,9 |
| Acide hexadécanoïque | 2,04 |
| Acide linoléique | 0,46 |
| Acide oléique | 0,28 |
| Acide stéarique | 0,05 |
| Acide 16-hydroxyhexadécanoïque | 3,6 |
| Acide 1,16-hexadécanedioïque | 0,61 |
| Acide 10,16-dihydroxyhexadécanoïque | 89,66 |
| Acide hydroxyhexadécan-1,16-dioïque | 2,12 |
| Acide dihydroxyoctanoïque | 0,28 |

L'acide 10,16-dihydroxyhexadécanoïque est le constituant largement majoritaire de cette composition huileuse, dont il représente quasiment 90 % du poids de la fraction majoritaire.

Préparation de polymères à base de la composition huileuse et de glycérol

La quantité souhaitée de la composition huileuse obtenue sont introduits dans un moule en inox, de dimensions 4x4 cm, recouvert de téflon. L'ensemble est préchauffé dans une étuve (Thermo Scientific FB65500) à 60°C pendant 5 min. La quantité souhaitée de glycérol est ensuite introduite dans le moule, cette quantité variant entre 5 et 25 % en poids, par rapport au poids total du mélange de glycérol et de la composition huileuse, qui est fixé à 1,8 g dans ces exemples.

A titre d'exemple comparatif, une expérience est réalisée avec la composition huileuse seule, sans ajout de glycérol.

Les différentes quantités de glycérol mises en oeuvre sont indiquées dans le tableau 2 ci-après.

Tableau 2 - * le nombre de moles d'acides gras est déterminé en considérant que la composition huileuse contient uniquement des acides gras, tous de même masse molaire que l'acide 10,16-dhydroxyhexadécanoïque Aucun autre composé, en particulier aucun catalyseur ni solvant, n'est introduit dans le milieu réactionnel.

| Polymère | PG0% | PG5% | PG10% | PG15% | PG20% | PG25% |
|---|---|---|---|---|---|---|
| Pourcentage massique de glycérol dans le milieu réactionnel (%) | 0 | 5 | 10 | 15 | 20 | 25 |
| Ratio molaire glycérol / acides gras* | 0 | 0,16 | 0,35 | 0,55 | 0,78 | 1,04 |
| Moles de glycérol : moles d'acides gras* | / | 1 : 6,2 | 1 : 2,9 | 1 : 1,8 | 1 : 1,3 | 1 : 0,96 |

Le moule contenant le milieu réactionnel ainsi formé est introduit dans l'étuve à 60°C, et le milieu réactionnel est homogénéisé par agitation manuelle au moyen d'une spatule pendant 5 min. Un agent desséchant (oxyde de phosphore $P_2O_5$) est également introduit dans l'étuve.

Il est ensuite appliqué dans l'étuve une température de 150 °C, et une pression réduite, pendant une phase initiale d'une durée de 90 min. Il se produit dans le milieu réactionnel la copolymérisation des acides gras contenus dans la composition huileuse et du glycérol, ainsi qu'un début de réticulation du polymère ainsi formé.

Différentes expériences sont réalisées à différentes valeurs de pression : 0, 200, 400, 600, 800 et 1000 mbar.

La pression dans l'étuve est ramenée à pression atmosphérique à l'issue de cette phase initiale, juste avant d'atteindre le point de gel du polymère, et les bulles s'étant formées dans le milieu réactionnel sont éliminées par agitation manuelle, toutes les 5 min pendant 20 min.

Le chauffage est ensuite poursuivi, durant la deuxième phase de l'étape de chauffage, pendant 22 h à 150°C, à pression atmosphérique, pour poursuivre la réticulation du polymère.

A l'issue de cette étape de chauffage, le moule est ôté de l'étuve et refroidi dans un bain de glace. On en retire un polymère solide doté, pour les exemples avec glycérol, de propriétés de déformation élastique. Ce polymère présente une architecture dont un exemple est montré sur la figure 1. Des liaisons de type ester se sont formées entre des groupements acide carboxylique des acides gras et des groupements hydroxyle des acides gras hydroxylés et du glycérol.

Analyse du taux d'estérification des réactifs initiaux

Pour chacun des polymères formés, on détermine le pourcentage de glycérol estérifié et le pourcentage d'acides gras estérifiés. On considère qu'un composé est estérifié quand au moins une de ses fonctions est engagée dans une liaison ester au sein du polymère.

A cet effet, 5 mg de polymère sont immergés dans 1 ml de méthanol pendant 16 h, à température ambiante et sous agitation, afin de récupérer le glycérol et les acides gras non estérifiés. Un aliquote de cette fraction de méthanol contenant le glycérol et les acides gras libres est prélevé et injecté en GC-MS après silylation. Dans un deuxième temps, le polymère « lavé », c'est-à-dire contenant seulement du glycérol et des acides gras estérifiés, est dépolymérisé à l'aide d'une base faible (méthanolate de sodium à 0,5 M) dans le méthanol anhydre. Cette dépolymérisation est effectuée pendant 16 h, sous agitation à température ambiante. Afin de finir la dépolymérisation, le mélange est chauffé pendant 2 h à 60 °C. Un aliquote de cette fraction est prélevé et injecté en GC-MS après silylation. Les différentes teneurs en glycérol et acides gras sont déterminées grâce à des étalons internes.

Les résultats obtenus, en terme de % de produit estérifié en fonction de la teneur en poids du milieu réactionnel initial en glycérol, sont montrés sur la figure 2 pour le glycérol, et sur la figure 3 pour les acides gras. On y observe que pour l'un comme pour l'autre du glycérol et des acides gras, le taux en poids des composés engagés dans une liaison ester au sein du polymère est supérieur à 85 %.

Analyse des polymères par spectroscopie infrarouge

Les polymères qui ont été obtenus, ainsi que la composition huileuse initiale, sont analysés par spectroscopie infrarouge par transformée de Fourier (FTIR). A cet effet, il est utilisé un spectromètre Nicolet MAGNA-IR 550 commercialisé par Thermo Scientific, piloté par le logiciel OMNIC®. La résolution est fixée à 2 $cm^{-1}$ et 30 acquisitions sont faites pour chaque spectre.

Les spectres obtenus, pour la composition huileuse initiale (CH) et, à titre d'exemple, le polymère PG25% (teneur de glycérol initiale de 25%) obtenu à une pression réduite de 400 mbar, sont montrés sur la figure 4. La figure 5 montre un agrandissement d'une zone de ces spectres.

Ces spectres montrent clairement la nature polyester du polymère PG25 % formé conformément à l'invention. Comme on peut le voir, la composition huileuse initiale présente bien une bande carbonyle intense monomodale centrée vers 1705 $cm^{-1}$, caractéristique des acides. Pour l'élastomère PG25%, on observe bien le déplacement de cette bande à une longueur d'onde caractéristique des esters, de 1731 $cm^{-1}$. La bande carbonyle ester est dédoublée avec un épaulement à 1715 $cm^{-1}$ qui traduit la formation de liaisons hydrogène avec des groupements hydroxyle non estérifiés (des acides gras hydroxylés et/ou du glycérol). La diminution de la bande caractéristique des hydroxyles, à 3500 $cm^{-1}$, entre le spectre de la composition huileuse initiale et celui de l'élastomère PG25%, confirme en outre l'estérification des groupements hydroxyles des acides gras hydroxylés.

Des spectres similaires sont obtenus pour tous les polymères préparés, quel que soit le taux initial de glycérol mis en oeuvre et quelle que soit la pression appliquée.

Ces résultats démontrent notamment qu'il est possible d'évaluer, et de suivre en temps réel lors de cinétiques temps-température, le niveau de la polymérisation en suivant l'intensité de la bande carbonyle ester à 1731 $cm^{-1}$, par rapport à l'intensité de la bande carbonyle non estérifiée (carboxylate) à 1705 $cm^{-1}$.

La figure 6 montre un agrandissement d'une zone de ces spectres, centrée sur la bande caractéristique des

fonctions hydroxyle, pour l'exemple particulier du polymère PG15% (teneur de glycérol initiale de 15%), à toutes les valeurs de pression testées. On y observe que l'intensité de la bande caractéristique des groupements hydroxyle diminue avec la valeur de la pression appliquée lors de l'étape de chauffage. Ceci démontre que plus la pression appliquée dans le dispositif est basse, moins le nombre de fonctions hydroxyle libres dans le polymère est élevé. La pression de 1000 mbar donne un taux de fonctions hydroxyle non estérifiées peu satisfaisant.

Des résultats comparables sont obtenus à toutes les autres teneurs initiales en glycérol testées.

Analyse de la nature des groupes hydroxyle estérifiés

Pour chaque polymère formé, il est en outre déterminé la proportion relative des groupements hydroxyle de l'acide 10,16-dihydroxyhexadécanoïque qui ont été estérifiés.

A cet effet, comme exposé ci-avant, il est appliqué la méthode décrite dans la publication de Philippe et al., dans Plant Physiology, 2016, 170, 807-820. 5 mg de polymère sont mélangés dans un tube en verre bouché pendant 24 h avec 50 mg de 2-benzyloxy-1-methylpyridinium triflate (Sigma-Aldrich) et 6 mg d'oxyde de magnésium dans 1 ml de tri-fluorotoluène à 90 °C. Le polymère est ensuite rincé au dichlorométhane et séché. Le polymère marqué est ensuite dépolymérisé à l'aide de méthanolate de sodium à 0,5 M. Cette dépolymérisation est effectuée pendant 16 h à 60 °C. Un aliquote de cette fraction est prélevé et injecté en chromatographie en phase gazeuse couplée à la spectrométrie de masse (GC-MS) après silylation.

On détermine ainsi, pour chaque polymère obtenu, les proportions en poids relatives des fragments correspondant à : l'acide 10,16-dihydroxyhexadécanoïque estérifié au niveau de ses deux fonctions hydroxyle, de formule (IIIa) ci-dessous ; l'acide 10,16-dihydroxyhexadécanoïque estérifié au niveau de sa fonction hydroxyle secondaire seulement, de formule (IIIb) ci-dessous ; l'acide 10,16-dihydroxyhexadécanoïque estérifié au niveau de sa fonction hydroxyle primaire seulement, de formule (IIIc) ci-dessous.

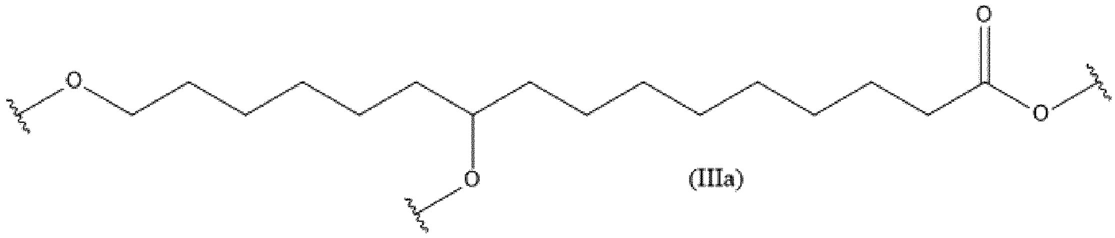

(IIIa)

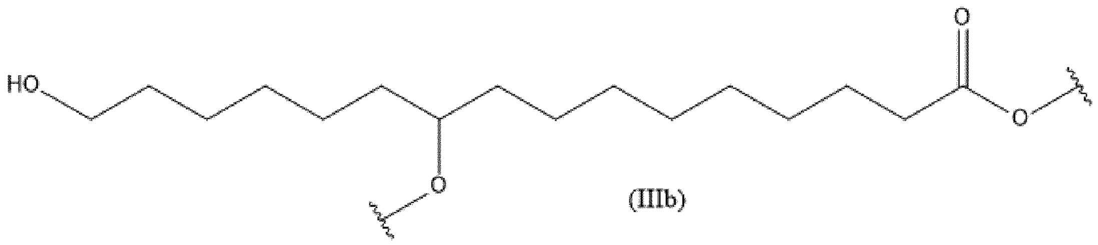

(IIIb)

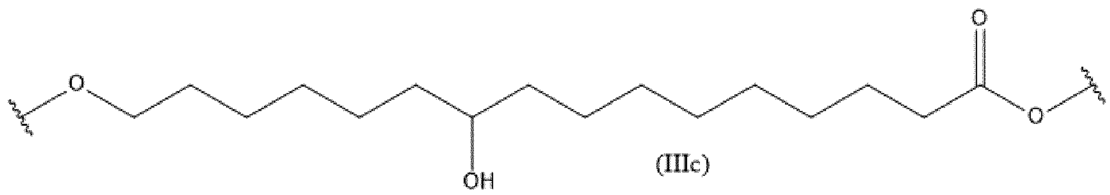

(IIIc)

Les résultats obtenus sont montrés sur la figure 7, pour les polymères formés à la pression de 400 mbar. On y observe que le schéma d'estérification des groupements hydroxyles de l'acide 10,16-dihydroxyhexadécanoïque est différent selon la teneur massique initiale de glycérol. Les groupements hydroxyle primaires, c'est-à-dire positionnés en bout de chaîne, en position ω, sont ceux qui sont le plus impliqués dans les réactions d'estérification / réticulation, par rapport aux groupements hydroxyle secondaires, positionnés en milieu de chaîne de l'acide gras. En outre, pour tous les polymères obtenus à partir de glycérol, la proportion de fragments dont les deux fonction hydroxyle sont estérifiées est inférieure à 70 %.

La figure 8 montre les résultats obtenus pour les polymères PG15%, pour toutes les valeurs de pression testées.

A la valeur de 0 mbar, la proportion de fragments dont les deux fonctions hydroxyle sont estérifiées est supérieure à 80 %, ce qui est peu satisfaisant. Les proportions relatives associées aux propriétés mécaniques les plus avantageuses du polymère sont obtenues pour les pressions comprises entre 400 et 800 mbar.

Pour chaque polymère formé, il est en outre déterminé la proportion relative des groupements hydroxyle de glycérol qui ont été estérifiés.

On détermine ainsi, pour chaque polymère obtenu, les proportions en poids relatives des fragments correspondant au : glycérol estérifié au niveau de ses trois fonctions hydroxyle, de formule (IVa) ci-dessous ; glycérol estérifié au niveau de ses fonctions hydroxyle en position 1 ou 3 seulement, de formule (IVb) ci-dessous ; glycérol estérifié au niveau de sa fonction hydroxyle en position 2 seulement, de formule (IVc) ci-dessous.

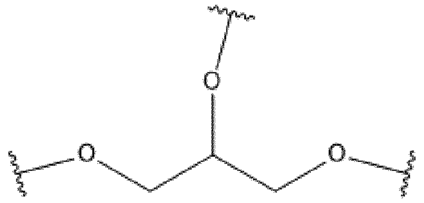

(IVa)

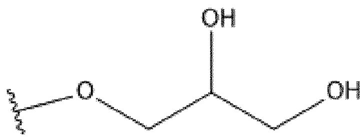

(IVb)

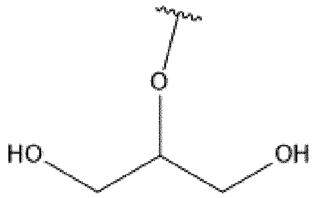

(IVc)

Les résultats obtenus sont montrés sur la figure 9, pour les polymères obtenus à la pression de 400 mbar. On y observe que pour tous les polymères obtenus à partir de glycérol, la proportion de fragments issus du glycérol dont toutes les fonctions hydroxyle sont estérifiées est largement majoritaire.

Analyse de la température de transition vitreuse des polymères

La température de transition vitreuse des polymères formés est mesurée par la technique de calorimétrie différentielle à balayage (DSC).

A cet effet, un calorimètre DSC-Q100 est utilisé. Des échantillons d'environ 10 mg sont placés dans des capsules hermétiques en aluminium. Ces capsules sont refroidies à -50 °C, puis chauffées jusqu'à 80 °C avec une rampe de montée en température de 3 °C/min.

Les résultats obtenus, exprimés en terme de température de transition vitreuse ainsi mesurée en fonction de la teneur massique initiale du glycérol dans le milieu réactionnel, sont montrés sur la figure 10, pour les polymères obtenus à 400 mbar. On y voit que la température de transition vitreuse des polymères selon l'invention est comprise entre -12,5 °C et -25 °C, alors que pour le polymère formé sans glycérol, elle est sensiblement égale à -10 °C.

Des résultats similaires sont obtenus pour les autres valeurs de pression testées comprises entre 0 et 900 mbar.

Analyse de la température de relaxation mécanique des polymères

La température de relaxation mécanique des polymères formés est déterminée par analyse mécanique dynamique (DMA), au moyen d'un dispositif Rheometric Scientific MK3E permettant également de mesurer le module de conservation au plateau caoutchoutique. Des échantillons de chaque polymère d'épaisseur 1 mm, hauteur 15 mm, largeur 4 mm ont été analysés de -50 °C à 80 °C, avec une vitesse de montée en température de 3 °C/min, avec une fréquence d'oscillation de 1 Hz, une déformation de 0,1% et une précharge de 0,5 N.

Les résultats obtenus, exprimés en terme de température de relaxation mécanique ainsi mesurée en fonction de la teneur massique initiale du glycérol dans le milieu réactionnel, sont montrés sur la figure 11, pour les polymères

obtenus à 400 mbar. Des résultats similaires sont obtenus pour les autres valeurs de pression testées comprises entre 0 et 900 mbar.

Analyse des propriétés mécaniques des polymères

Les polymères obtenus sont soumis à un test de traction, sur un banc de traction MTS Criterion®, piloté par le logiciel TestWorks® 4. A cet effet, il est réalisé des éprouvettes de forme et de dimensions montrées sur la figure 12, et d'épaisseur 1 mm. Le déplacement est défini à 10 mm.min$^{-1}$. Le test est effectué à température ambiante.

La figure 13 montre le module de Young mesuré en fonction de la teneur massique initiale du glycérol dans le milieu réactionnel, pour les polymères obtenus à 400 mbar. Ces résultats montrent que pour tous les polymères conformes à l'invention, préparés à partir de glycérol, le module de Young est inférieur à celui mesuré pour le polymère comparatif préparé sans mettre en oeuvre de glycérol.

La figure 14 montre la contrainte maximale à la rupture mesurée en fonction de la teneur massique initiale du glycérol dans le milieu réactionnel, pour les polymères obtenus à 400 mbar. Ces résultats montrent que pour tous les polymères conformes à l'invention, préparés à partir de glycérol, la contrainte maximale à la rupture est inférieure à celle mesurée pour le polymère comparatif préparé sans mettre en oeuvre de glycérol.

La figure 15 montre le pourcentage de déformation à la rupture mesuré en fonction de la teneur massique initiale du glycérol dans le milieu réactionnel, pour les polymères obtenus à 400 mbar. Ces résultats montrent que pour tous les polymères conformes à l'invention, préparés à partir de glycérol, le % de déformation à la rupture est bien supérieur à celui mesuré pour le polymère comparatif préparé sans mettre en oeuvre de glycérol.

L'ensemble de ces résultats démontrent une bonne capacité d'étirement des polymères selon l'invention.

Des résultats similaires sont obtenus pour les autres valeurs de pression testées comprises entre 0 et 900 mbar.

Test de solubilité

Un échantillon de chacun des polymères obtenus est soumis à un test de solubilité dans les différents solvants suivants : eau, méthanol, éthanol, isopropanol, chloroforme, tétrahydrofurane, dichlorométhane, diméthylsulfoxyde. A cet effet, 10 mg de chaque échantillon sont immergés dans 1 ml de solvant, puis l'ensemble est agité pendant 18 h à température ambiante. Le pourcentage en poids de matière insoluble, par rapport au poids de matière initiale, est ensuite déterminé pour chaque couple échantillon solvant.

A titre d'exemple, les résultats obtenus pour le polymère PG5 % obtenu avec application d'une pression de 400 mbar pendant l'étape de chauffage sont montrés dans le tableau 3 ci-dessous.

Tableau 3

| Solvant | Pourcentage en poids de matière insoluble (%) |
|---|---|
| Eau | 94,5 |
| Méthanol | 89,1 |
| Ethanol | 91,1 |
| Isopropanol | 94,1 |
| Chloroforme | 91,6 |
| Tétrahydrofurane | 92,4 |
| Dichlorométhane | 91 |
| Diméthylsulfoxyde | 99,1 |

Des résultats similaires sont obtenus pour les autres polymères selon l'invention.

Analyse de la cristallinité

Les polymères obtenus en appliquant une pression de 400 mbar pendant l'étape de chauffage, sont analysé par Calorimétrie Différentielle à balayage (DSC) selon le protocole indiqué ci-avant. Les résultats sont montrés sur la figure 16 pour le polymère PG0%, sur la figure 17 pour le polymère PG15% et sur la figure 18 pour le polymère PG25%. On y observe, pour les teneurs massiques initiales en glycérol supérieures ou égales à 15 % en poids, la présence d'un pic de fusion indicatif d'une structure cristalline

Ces résultats sont confirmés par une analyse par Diffraction des Rayons X (DRX) de ces polymères, au moyen d'un diffractomètre à rayon X Bruker D8 équipé d'un détecteur Vantée 500. Le rayonnement X, Cu K$\alpha$1 (=0,15406 nm), produit dans un tube de cuivre scellé à 40 kV et 40 mA, est sélectionné et parallélisé à l'aide de miroirs de Goebel. La distance entre l'échantillon et le détecteur est de 10 cm et les angles de Bragg de 3 à 70 (°2$\theta$).

Les spectres DRX obtenus sont montrés sur la figure 19 pour le polymère PG0% et sur la figure 20 pour le polymère PG25%. On observe, pour le polymère PG25%, l'apparition d'un pic témoignant d'une zone cristalline, indiqué par une flèche sur la figure.

Des résultats similaires sont obtenus pour les autres polymères selon l'invention obtenus à partir d'une teneur massique en glycérol dans le milieu réactionnel supérieure ou égale à 15 %.

La figure 21 montre les spectres DRX obtenus pour des polymères préparés à partir d'une teneur massique en glycérol dans le milieu réactionnel de 15 %, en appliquant une pression de 400 mbar ou de 1000 mbar pendant l'étape de chauffage. On observe qu'une structure semi-cristalline est obtenue pour la valeur de pression de 400 mbar conforme à l'invention.

La figure 22 montre quant à elle les spectres DRX obtenus pour l'extrait de cutine de tomate initial (en A/) et pour le polymère obtenu à partir de cet extrait et de glycérol à une teneur massique de 20 %, une pression de 400 mbar ayant été appliquée lors de l'étape de chauffage (en B/). On y observe clairement que l'organisation cristalline du polymère préparé conformément à l'invention est différente de celle de l'extrait initial. Les pics témoignant d'une cristallisation en beta, observés sur le spectre de la composition huileuse, ont disparu au profit d'un pic témoignant d'une cristallisation en phase hexagonale, à 4,2 Å, sur le spectre du polymère.

Analyse du module de conservation au plateau caoutchoutique et de la densité de réticulation apparente

Comme indiqué précédemment, le module de conservation est mesuré par analyse mécanique dynamique (DMA), au moyen d'un dispositif Rheometric Scientific MK3E.

A une température de 50 °C, les matériaux ont un comportement de type caoutchoutique avec un module de conservation de l'ordre du mégapascal. L'application de la théorie de Flory sur l'élasticité caoutchoutique permet alors d'estimer v la densité de réticulation apparente du réseau élastomère, selon l'équation :

$$\nu = E'/3RT$$

où R est la constante des gaz (8,32 $J.mol^{-1}.K^{-1}$), T est la température en Kelvin et E' est le module de conservation au plateau caoutchoutique mesuré 50 °C (soit 323 K).

Les résultats obtenus, pour une pression de 400 mbar, sont montrés sur la figure 23 en fonction de la teneur massique initiale en glycérol. On observe que le module de conservation E' mesuré à 50 °C, au plateau caoutchoutique amorphe, diminue lorsque la teneur initiale en glycérol dans le milieu réactionnel augmente, puis devient constant pour les teneurs en glycérol supérieures ou égales à 15 % en masse. Il en est de même de la densité de réticulation apparente, qui d'après la théorie de Flory est directement proportionnelle au module d'élasticité.

Ces résultats démontrent que le procédé selon l'invention permet de produire des polymères de structure moléculaire maîtrisée et de caractère amorphe ou semi-cristallin, en fonction de la teneur massique en glycérol dans le milieu réactionnel initial.

Le rapport du module de conservation mesuré pour différentes valeurs de pression appliquées pendant l'étape de chauffage du procédé, par rapport au module de conservation mesuré lorsque le procédé est mis en oeuvre à pression atmosphérique (ratio E'/Eatm) est montré sur la figure 24, pour les polymères obtenus à partir d'une teneur initiale en glycérol de 15 % en poids.

Ce rapport est sensiblement constant dans la plage de pression de 400 à 800 mbar, ce qui témoigne d'une structure stable des polymères obtenus conformément à l'invention dans cette plage.

Détermination de la température de fusion

Les températures de fusion sont mesurées par analyse enthalpique différentielle (AED ou calorimétrie différentielle à balayage (DSC pour Differential Scanning Calorimetry)), comprenant un balayage en température d'un échantillon de polymère, d'une température de -50 °C jusqu'à une température de 80 °C avec une rampe de montée en température de 3 °C/min. Cette analyse est réalisée sur une quantité de polymère de 10 mg, placée dans une capsule hermétique en aluminium.

L'ensemble des résultats obtenus, à titre d'exemple pour les polymères formés conformément à l'invention pour une pression de 400 mbar appliquée pendant l'étape de chauffage, sont regroupés dans les tableaux 4 et 5 cidessous.

Tableau 4 - Caractérisations chimique et par DSC de polymères obtenus selon l'invention, une pression de 400 mbar ayant été appliquée pendant le chauffage

| Polymère | Caractérisation chimique | | Analyse par DSC | | |
|---|---|---|---|---|---|
| | % en poids de glycérol | % en poids de glycérol réticulé | Température de transition vitreuse (°C) | Température de fusion 1 (°C) | Température de fusion 2 (°C) |
| PG5% | 2,27 | 2,17 | -13,1 | - | - |
| PG10% | 3,93 | 3,75 | -15,7 | - | 39,7 |
| PG15% | 4,8 | 4,57 | -17,0 | 17,9 | 41,6 |
| PG20% | 5,2 | 4,87 | -20,4 | 16,8 | 41,2 |
| PG25% | 6,18 | 5,89 | -18,5 | 18,3 | 41,6 |

Tableau 5 -_Caractérisations par DMA et par test mécanique de polymères obtenus selon l'invention, une pression de 400 mbar ayant été appliquée pendant le chauffage

| Polymère | Analyse par DMA | | Test mécanique | | |
|---|---|---|---|---|---|
| | Température de relaxation mécanique (°C) | Module de conservation à 50°C (MPa) | Contrainte à la rupture (%) | Allongement à la rupture (%) | Module de Young (MPa) |
| PG5% | 5,4 | 5,035 | 2,0 | 155 | 1,74 |
| PG10% | 3,2 | 4,058 | 1,7 | 180,7 | 1,26 |
| PG15% | 1,9 | 1,408 | 1,4 | 178,4 | 1,11 |
| PG20% | 0,9 | 1,521 | 1,3 | 197,3 | 1,10 |
| PG25% | 0,2 | 1,589 | 1,5 | 217,6 | 1,19 |

L'ensemble de ces résultats s'avèrent particulièrement satisfaisants, tout particulièrement pour les polymères PG15%, PG20% et PG25%.

EXPERIENCE 2 - Cutine de pomme

A partir de drèches industrielles issues de la transformation de pommes, les acides gras hydroxylés de la cutine de pomme ont été extraits dans les mêmes conditions que décrit dans l'Expérience 1 pour la tomate.

Après rinçage(s) du culot obtenu à l'eau déminéralisée et lyophilisation, on obtient, avec un rendement compris entre 20 et 25 %, une composition huileuse contenant essentiellement des acides gras hydroxylés, et plus particulièrement, les pourcentages étant exprimés en poids par rapport au poids total de la composition huileuse : 44 % d'acide dihydroxyhexadécanoïque, 24 % d'acide 18-hydroxy-(9,10)époxy-octadécanoïque, 10 % d'acide 18-hydroxy-octadécenoïque, 7 % d'acide trihydroxyoctadécanoïque, 5 % d'acide 16-hydroxyhexadécanoïque, 6 % d'acide palmitique, 2 % d'acide hexadécanedioïque, 1 % d'acide 22-hydroxy-docosanoïque, 1 % d'acide coumarique.

Un polymère est préparé à base de cette composition huileuse et de glycérol, dans les conditions décrites dans l'Expérience 1, avec une température de chauffage de 150°C, une pression réduite de 400 mbar et une teneur en glycérol de 10% (p/p).

La formation de polyester est confirmée par analyse par spectroscopie infrarouge par transformée de Fourier, réalisée comme décrit dans l'Expérience 1 : comme montré sur la figure 25, on observe sur le spectre infrarouge, pour le polymère obtenu (« PPG10% »), l'apparition d'une bande caractéristique d'un groupement ester et le décalage de la bande caractéristique du groupement carbonyle par rapport à la composition huileuse initiale (« CHP »).

**Revendications**

1. Procédé de préparation d'un polymère à base d'acide gras polyhydroxylé, comprenant, successivement, des étapes de :

   - préparation d'un milieu réactionnel par mise en présence :

     - d'un monomère choisi parmi les acides gras polyhydroxylés comportant un groupement hydroxyle en position ω et les esters d'un acide gras polyhydroxylé comportant un groupement hydroxyle en position ω et d'un alcool à chaine aliphatique linéaire ou ramifiée, saturée ou insaturée, éventuellement substituée, ladite chaine aliphatique comportant de 1 à 18 atomes de carbone ; ou d'un mélange d'acides gras hydroxylés et/ou d'esters d'un acide gras hydroxylé et d'un alcool à chaine aliphatique linéaire ou ramifiée, saturée ou insaturée, éventuellement substituée, ladite chaine aliphatique comportant de 1 à 18 atomes de carbone, ledit mélange contenant au moins 20 % en poids dudit monomère par rapport au poids total dudit mélange,
     - avec un polyol différent dudit monomère et le cas échéant différent desdits acides gras hydroxylés et/ou desdits esters dudit mélange,

   ledit milieu réactionnel étant exempt de catalyseur,
   - et chauffage dudit milieu réactionnel pour réaliser la copolymérisation dudit monomère et dudit polyol et la réticulation du polymère ainsi formé,

   **caractérisé en ce qu'**au moins une phase initiale de l'étape de chauffage est réalisée sous pression réduite, à une pression comprise entre 0 et 900 mbar.

2. Procédé selon la revendication 1, selon lequel la durée de la phase initiale est comprise entre 30 minutes et 5 heures.

3. Procédé selon l'une quelconque des revendications 1 à 2, selon lequel ledit polyol est un triol.

4. Procédé selon la revendication 3, selon lequel ledit polyol est le glycérol.

5. Procédé selon l'une quelconque des revendications 1 à 4, selon lequel ledit monomère est un ester méthylique ou éthylique d'un acide gras polyhydroxylé comportant un groupement hydroxyle en position ω.

6. Procédé selon l'une quelconque des revendications 1 à 5, selon lequel ledit monomère est obtenu par dépolymérisation de cutine.

7. Procédé selon l'une quelconque des revendications 1 à 6, selon lequel ledit monomère est un acide gras dihydroxylé comportant un groupement hydroxyle en position ω ou un ester d'un acide gras dihydroxylé comportant un groupement hydroxyle en position ω et d'un alcool à chaine aliphatique linéaire ou ramifiée, saturée ou insaturée, éventuellement substituée, comportant de 1 à 18 atomes de carbone.

8. Procédé selon l'une quelconque des revendications 1 à 7, selon lequel la préparation dudit milieu réactionnel comprend le mélange dudit polyol avec une composition issue de la dépolymérisation de cutine.

9. Procédé l'une quelconque des revendications 1 à 8, selon lequel le milieu réactionnel contient 1 à 25 % en poids dudit polyol, par rapport au poids total dudit milieu réactionnel.

10. Procédé l'une quelconque des revendications 1 à 9, selon lequel le milieu réactionnel contient 15 à 25 % en poids dudit polyol, par rapport au poids total dudit milieu réactionnel.

11. Procédé l'une quelconque des revendications 1 à 10, selon lequel le rapport molaire entre ledit polyol et ledit monomère dans ledit milieu réactionnel est compris entre 0,16 et 1,04.

12. Procédé selon l'une quelconque des revendications 1 à 11, selon lequel au moins ladite phase initiale de l'étape de chauffage est réalisée à une pression comprise entre 400 et 800 mbar.

13. Procédé selon l'une quelconque des revendications 1 à 12, comprenant, pendant ladite étape de chauffage, avant

que le point de gel dudit polymère ait été atteint, une étape d'élimination des bulles présentes dans ledit milieu réactionnel.

**14.** Polymère de type polyester susceptible d'être obtenu par un procédé selon l'une quelconque des revendications 1 à 13, dont un motif monomère est un acide gras polyhydroxylé comportant un groupement hydroxyle en position ω, ledit polymère présentant :

- une température de transition vitreuse, mesurée par analyse enthalpique différentielle comprenant un balayage en température de -50 °C jusqu'à 80°C selon une rampe de 3 °C/min, comprise entre -12,5 °C et -25 °C,
- et un taux de fonctions hydroxyle portées par ledit motif monomère qui sont libres compris entre 10 et 50 %.

**15.** Polymère selon la revendication 14, présentant des zones cristallines.

**Patentansprüche**

**1.** Verfahren zum Zubereiten eines auf Polyhydroxyfettsäure basierenden Polymers, das nacheinander die folgenden Schritte umfasst:

- Zubereiten eines Reaktionsmediums durch Zusammenbringen von:

-- eines Monomers, ausgewählt unter den polyhydroxylierten Fettsäuren mit einer Hydroxylgruppe in Position ω und den Estern einer polyhydroxylierten Fettsäure mit einer Hydroxylgruppe in Position ω und einem Alkohol mit einer gesättigten oder ungesättigten, gegebenenfalls substituierten, linearen oder verzweigten aliphatischen Kette, wobei die aliphatische Kette 1 bis 18 Kohlenstoffatome enthält; oder aus einer Mischung von hydroxylierten Fettsäuren und/oder Estern einer hydroxylierten Fettsäure und eines Alkohols mit einer linearen oder verzweigten, gesättigten oder ungesättigten, gegebenenfalls substituierten aliphatischen Kette, wobei die aliphatische Kette 1 bis 18 Kohlenstoffatome enthält, wobei die Mischung mindestens 20 Gew.-% des Monomers, bezogen auf das Gesamtgewicht der Mischung, enthält,
-- mit einem Polyol, das sich von dem Monomer und optional von den hydroxylierten Fettsäuren und/oder den Estern der Mischung unterscheidet,

wobei das Reaktionsmedium katalysatorfrei ist,
- und Erhitzen des Reaktionsmediums, um die Copolymerisation des Monomers und des Polyols und die Vernetzung des so gebildeten Polymers zu ermöglichen, **dadurch gekennzeichnet, dass** mindestens eine anfängliche Phase des Erhitzungsschritts unter reduziertem Druck durchgeführt wird, bei einem Druck zwischen 0 und 900 mbar.

**2.** Verfahren nach Anspruch 1, nach dem die Dauer der anfänglichen Phase zwischen 30 Minuten und 5 Stunden liegt.

**3.** Verfahren nach einem der Ansprüche 1 bis 2, nach dem das Polyol ein Triol ist.

**4.** Verfahren nach Anspruch 3, wobei das Polyol Glycerin ist.

**5.** Verfahren nach einem der Ansprüche 1 bis 4, nach dem das Monomer ein Methyl- oder Ethylester einer polyhydroxylierten Fettsäure ist, die eine Hydroxylgruppe in der Position ω enthält.

**6.** Verfahren nach einem der Ansprüche 1 bis 5, nach dem das Monomer durch Depolymerisation von Cutin erhalten wird.

**7.** Verfahren nach einem der Ansprüche 1 bis 6, nach dem das Monomer eine Dihydroxyfettsäure mit einer Hydroxylgruppe in Position ω oder ein Ester einer Dihydroxyfettsäure mit einer Hydroxylgruppe in Position ω und eines Alkohols mit einer gesättigten oder ungesättigten, optional substituierten, linearen oder verzweigten aliphatischen Kette mit 1 bis 18 Kohlenstoffatomen ist.

**8.** Verfahren nach einem der Ansprüche 1 bis 7, nach dem die Zubereitung des Reaktionsmediums das Mischen des Polyols mit einer aus der Depolymerisation von Cutin resultierenden Zusammensetzung umfasst.

9. Verfahren nach einem der Ansprüche 1 bis 8, nach dem das Reaktionsmedium 1 bis 25 Gew.-% des Polyols, bezogen auf das Gesamtgewicht des Reaktionsmediums, enthält.

10. Verfahren nach einem der Ansprüche 1 bis 9, nach dem das Reaktionsmedium 15 bis 25 Gew.-% des Polyols, bezogen auf das Gesamtgewicht des Reaktionsmediums, enthält.

11. Verfahren nach einem der Ansprüche 1 bis 10, nach dem das molare Verhältnis zwischen dem Polyol und dem Monomer in dem Reaktionsmedium zwischen 0,16 und 1,04 liegt.

12. Verfahren nach einem der Ansprüche 1 bis 11, nach dem mindestens die anfängliche Phase des Erhitzungsschritts bei einem Druck zwischen 400 und 800 mbar durchgeführt wird.

13. Verfahren nach einem der Ansprüche 1 bis 12, umfassend während des Erhitzungsschritts, bevor der Gelpunkt des Polymers erreicht ist, einen Schritt zum Entfernen der in dem Reaktionsmedium vorhandenen Blasen.

14. Polymer vom Typ Polyester, erhältlich nach einem Prozess nach einem der Ansprüche 1 bis 13, bei dem eine Monomereinheit eine polyhydroxylierte Fettsäure ist, die eine Hydroxylgruppe in der Position ω enthält, wobei das Polymer Folgendes aufweist:

- eine durch Differentialabtastkalorimetrie gemessene Glasübergangstemperatur, die einen Temperaturübergang von -50 °C auf 80 °C mit einer Rampe von 3 °C/min umfasst, zwischen -12,5 °C und -25 °C,
- und eine Stufe von freien Hydroxylfunktionen, die von der Monomereinheit getragen werden, zwischen 10 und 50 %.

15. Polymer nach Anspruch 14, mit kristallinen Zonen.

## Claims

1. Method for preparing a polymer based on a polyhydroxylated fatty acid, comprising, successively, steps of:

- preparation of a reaction medium by bringing together:

  - a monomer selected from polyhydroxylated fatty acids comprising an hydroxyl group at the ω position and esters of a polyhydroxylated fatty acid comprising an hydroxyl group at the ω position and of an alcohol with a linear or branched, saturated or unsaturated, optionally substituted, aliphatic chain, said aliphatic chain including from 1 to 18 carbon atoms; or a mixture of hydroxylated fatty acids and/or esters of a hydroxylated fatty acid and of an alcohol with a linear or branched, saturated or unsaturated, optionally substituted, aliphatic chain, said aliphatic chain including from 1 to 18 carbon atoms, said mixture containing at least 20% by weight of said monomer with respect to the total weight of said mixture,
  - with a polyol different from said monomer and where appropriate different from said hydroxylated fatty acids and/or said esters of said mixture,

said reaction medium being free of catalyst,
- and heating of said reaction medium to carry out the copolymerisation of said monomer and of said polyol and the crosslinking of the polymer thus formed, **characterized in that** at least an initial phase of the heating step is carried out under reduced pressure, at a pressure comprised between 0 and 900 mbar.

2. Method according to claim 1, wherein the duration of the initial phase is comprised between 30 minutes and 5 hours.

3. Method according to any one of claims 1 to 2, wherein said polyol is a triol.

4. Method according to claim 3, wherein said polyol is glycerol.

5. Method according to any one of claims 1 to 4, wherein said monomer is a methyl or ethyl ester of a polyhydroxylated fatty acid comprising an hydroxyl group at the ω position.

6. Method according to any one of claims 1 to 5, wherein said monomer is obtained by depolymerising cutin.

**7.** Method according to any one of claims 1 to 6, wherein said monomer is a dihydroxylated fatty acid comprising an hydroxyl group at the ω position or an ester of a dihydroxylated fatty acid comprising an hydroxyl group at the ω position and of an alcohol with a linear or branched, saturated or unsaturated, optionally substituted, aliphatic chain, including from 1 to 18 carbon atoms.

**8.** Method according to any one of claims 1 to 7, wherein the preparation of said reaction medium comprises mixing said polyol with a composition resulting from the depolymerisation of cutin.

**9.** Method of any one of claims 1 to 8, wherein the reaction medium contains 1 to 25% by weight of said polyol, with respect to the total weight of said reaction medium.

**10.** Method of any one of claims 1 to 9, wherein the reaction medium contains 15 to 25% by weight of said polyol, with respect to the total weight of said reaction medium.

**11.** Method of any one of claims 1 to 10, wherein the molar ratio of said polyol to said monomer in said reaction medium is comprised between 0.16 and 1.04.

**12.** Method according to any one of claims 1 to 11, wherein at least said initial phase of the heating step is carried out at a pressure comprised between 400 and 800 mbar.

**13.** Method according to any one of claims 1 to 12, comprising, during said heating step, before the gel point of said polymer has been reached, a step of eliminating bubbles present in said reaction medium.

**14.** Polyester-type polymer obtainable by a method according to any one of claims 1 to 13, a monomer unit of which is a polyhydroxylated fatty acid comprising an hydroxyl group at the ω position, said polymer having:

- a glass-transition temperature, measured by differential enthalpy analysis comprising a temperature scanning from -50°C up to 80°C with a ramp of 3°C/min, comprised between -12.5°C and -25°C,
- and a rate of hydroxyl functions carried by said monomer unit that are free between 10 and 50%.

**15.** Polymer according to claim 14, having crystalline zones.

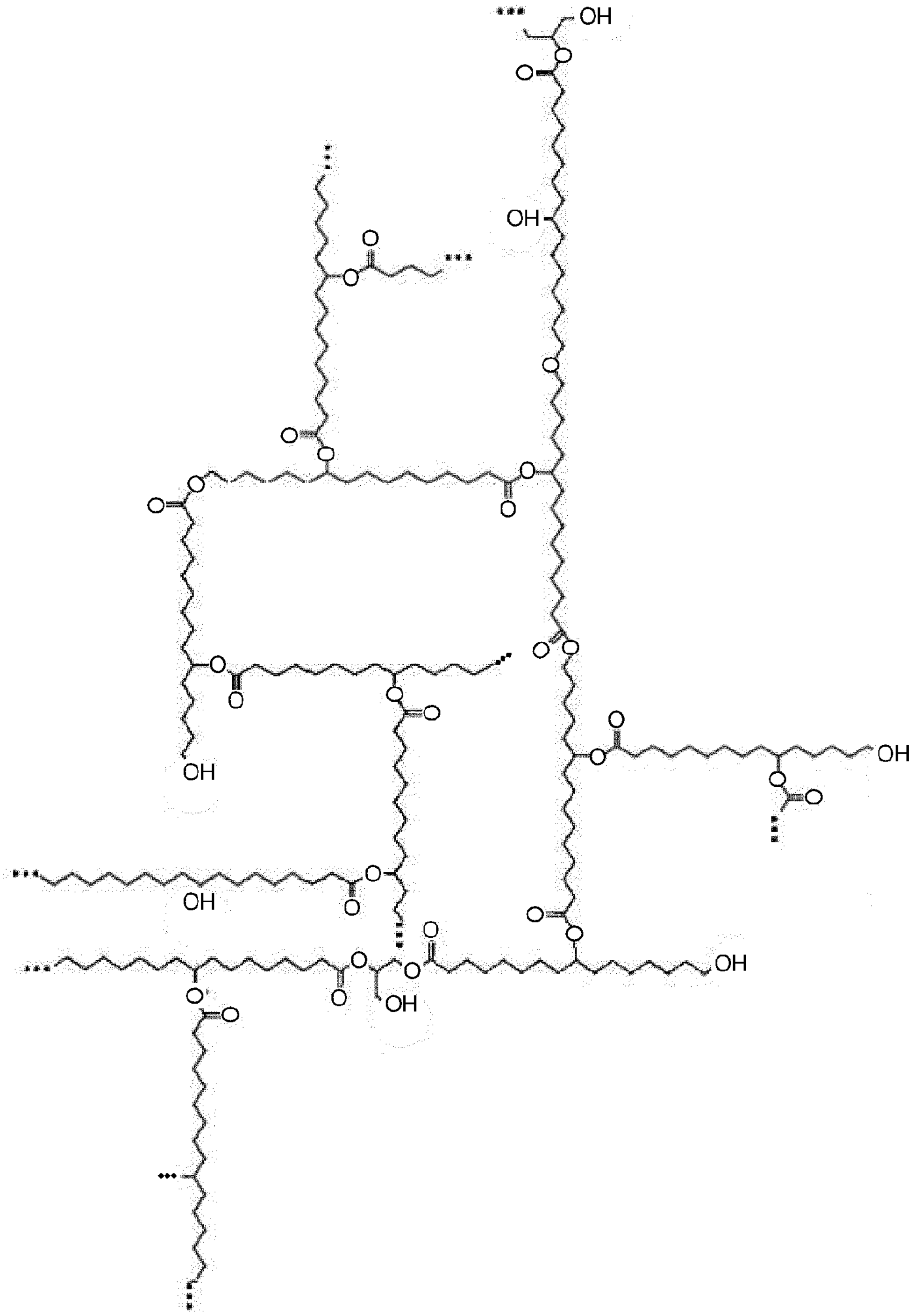

FIG 1

FIG 2

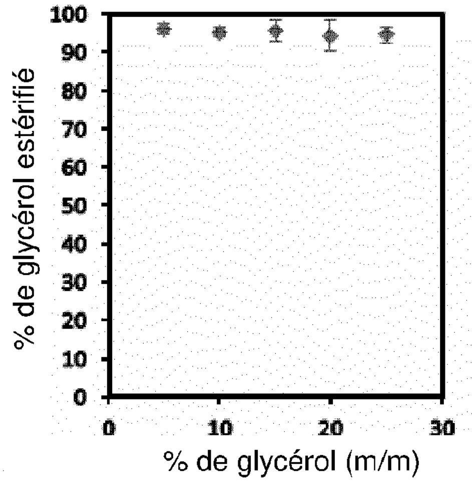
% de glycérol estérifié
100
90
80
70
60
50
40
30
20
10
0
0
10
20
30
% de glycérol (m/m)

FIG 3

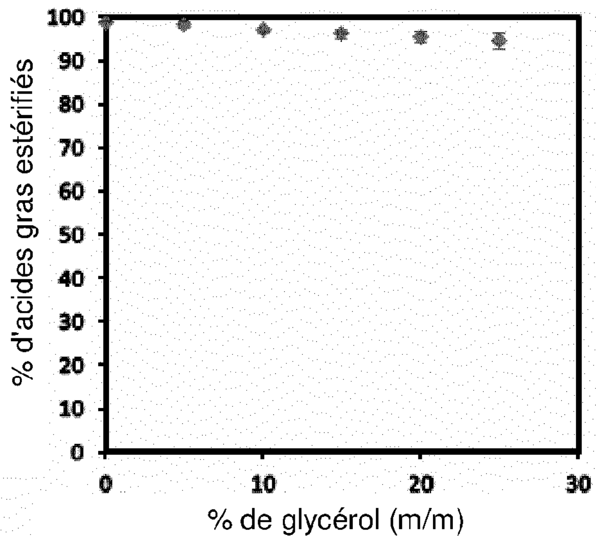
% d'acides gras estérifiés
100
90
80
70
60
50
40
30
20
10
0
0
10
20
30
% de glycérol (m/m)

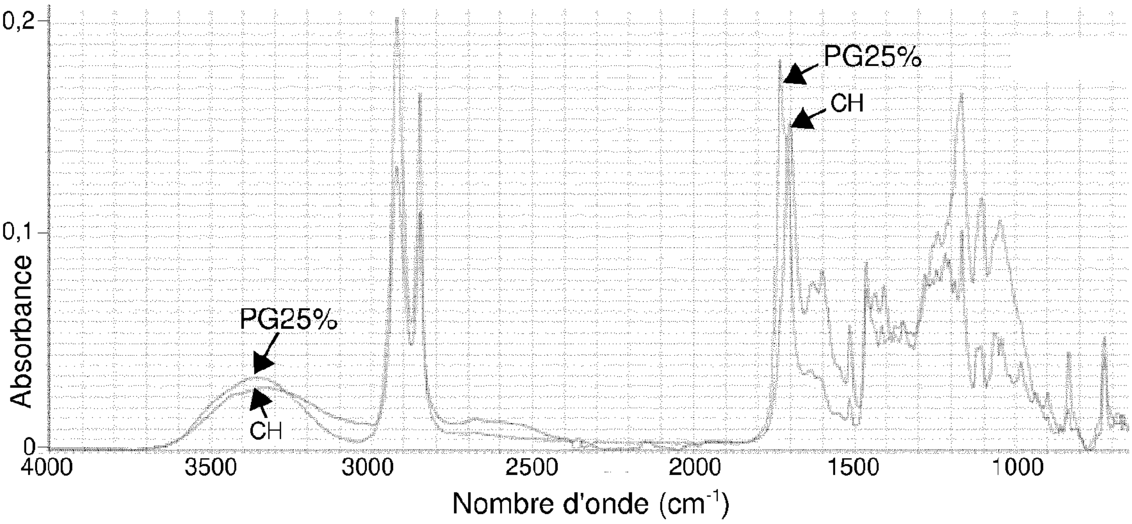
0,2
0,1
0
Absorbance
PG25%
CH
PG25%
CH
4000
3500
3000
2500
2000
1500
1000
Nombre d'onde (cm-1)

FIG 4

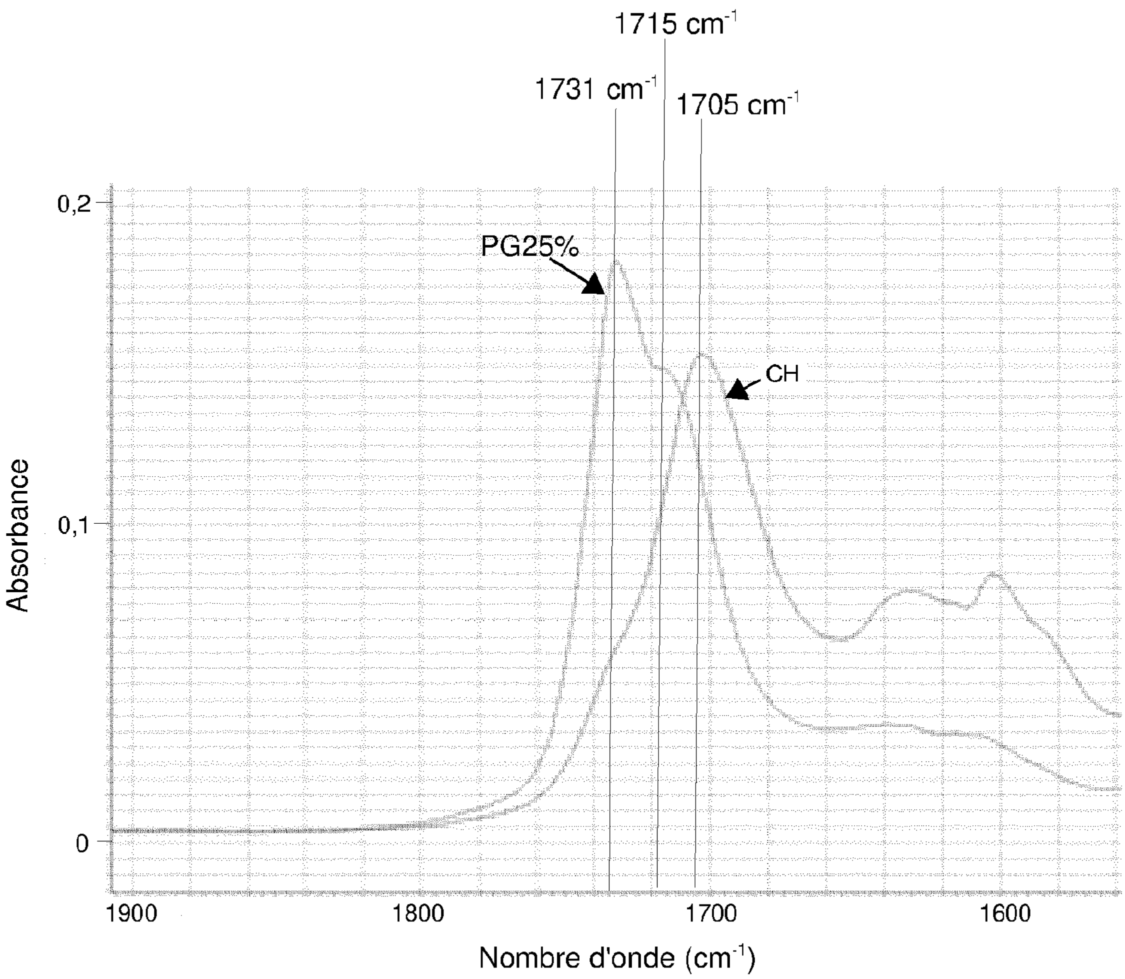
1715 cm-1
1731 cm-1
1705 cm-1
0,2
0,1
0
Absorbance
PG25%
CH
1900
1800
1700
1600
Nombre d'onde (cm-1)

FIG 5

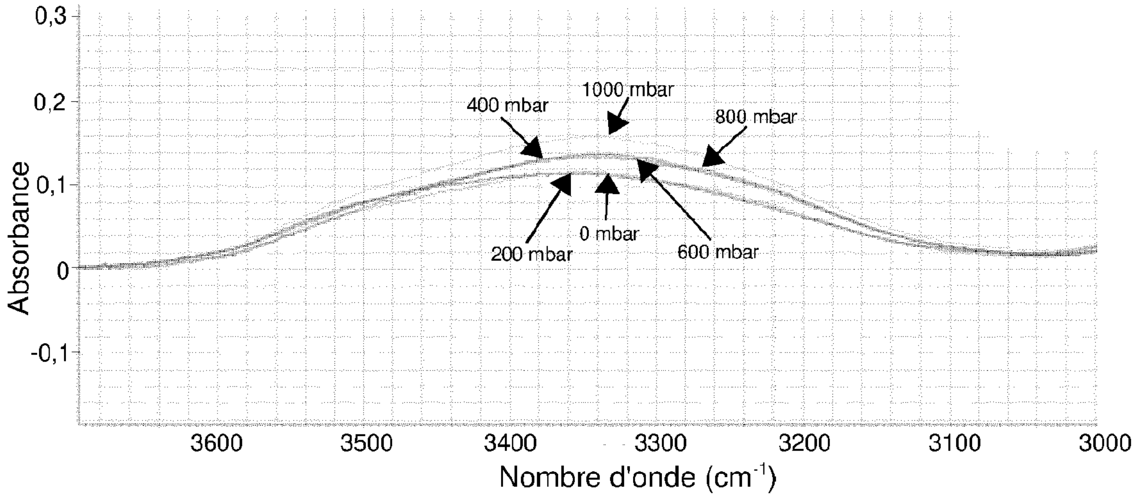
0,3
0,2
0,1
0
-0,1
Absorbance
1000 mbar
400 mbar
800 mbar
0 mbar
200 mbar
600 mbar
3600
3500
3400
3300
3200
3100
3000
Nombre d'onde (cm$^{-1}$)

FIG 6

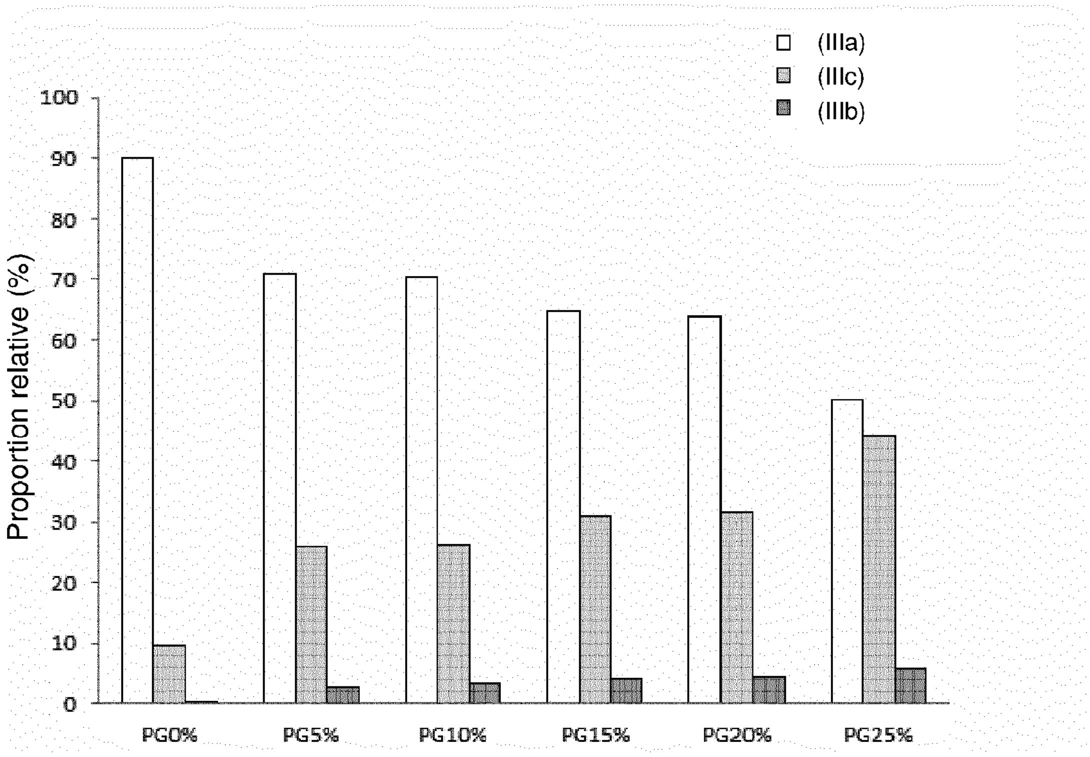
(IIIa)
(IIIc)
(IIIb)
100
90
80
70
60
50
40
30
20
10
0
Proportion relative (%)
PG0%
PG5%
PG10%
PG15%
PG20%
PG25%

FIG 7

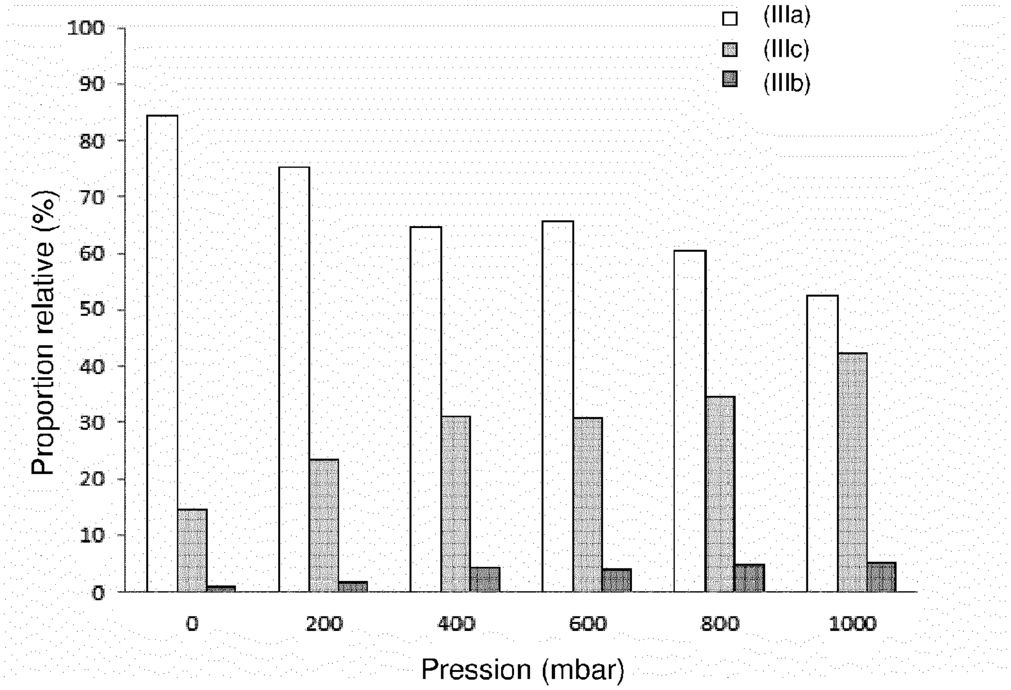
(IIIa)
(IIIc)
(IIIb)
Proportion relative (%)
100
90
80
70
60
50
40
30
20
10
0
0
200
400
600
800
1000
Pression (mbar)

FIG 8

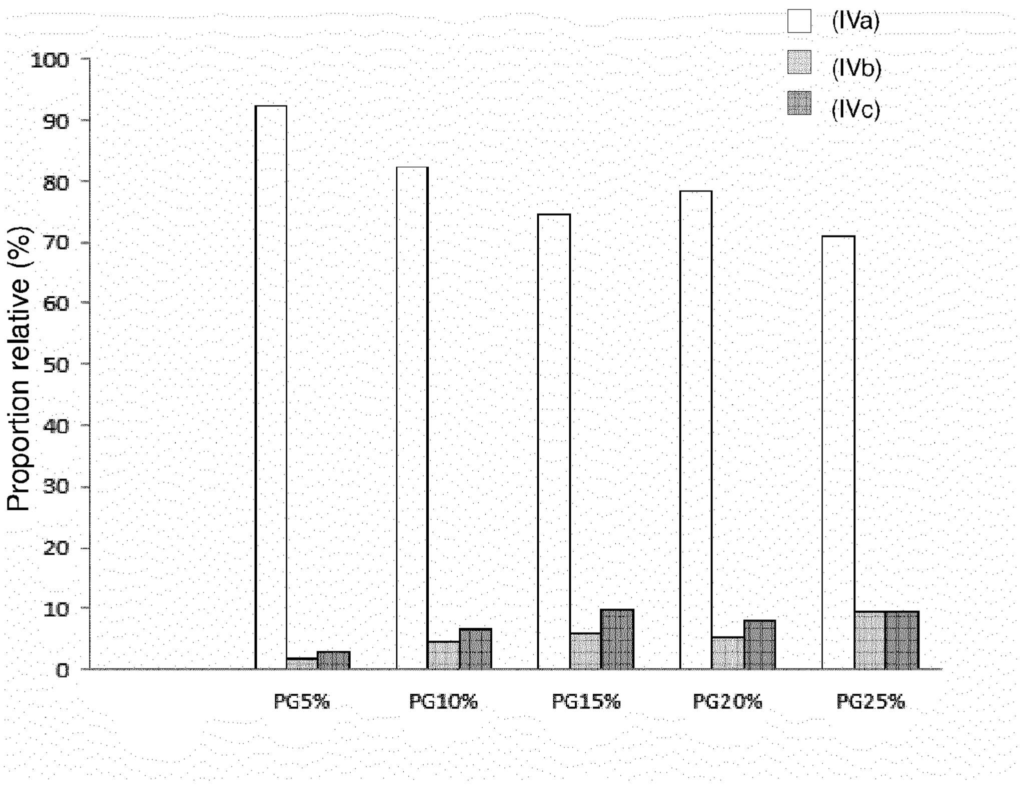
(IVa)
(IVb)
(IVc)
Proportion relative (%)
100
90
80
70
60
50
40
30
20
10
0
PG5%
PG10%
PG15%
PG20%
PG25%

FIG 9

FIG 10

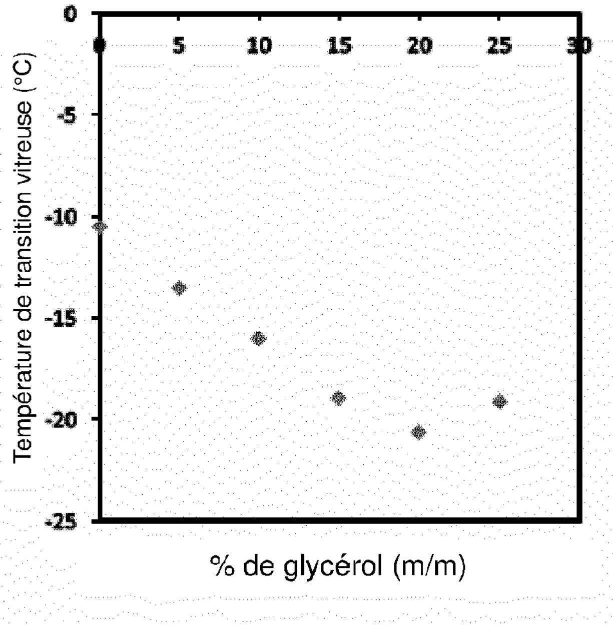


FIG 11

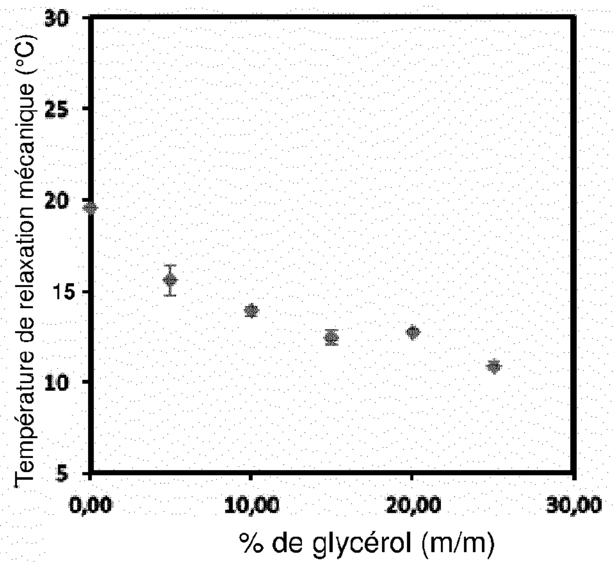


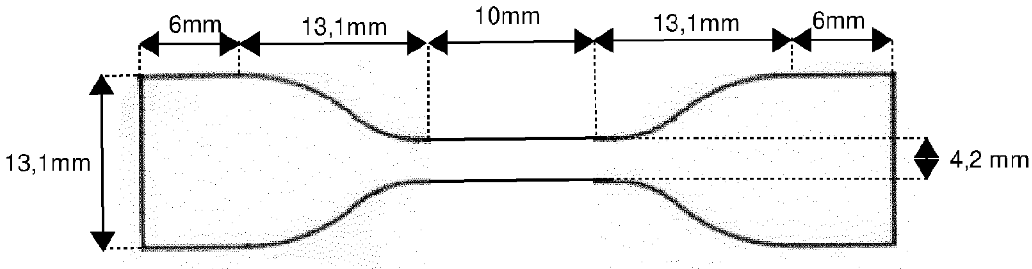


FIG 12

FIG 13

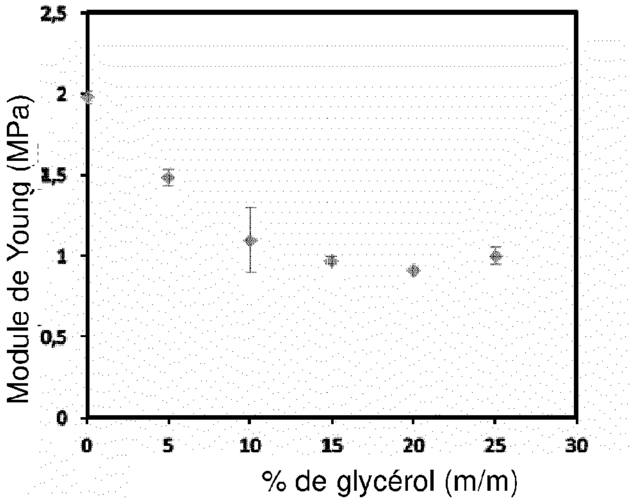


FIG 14

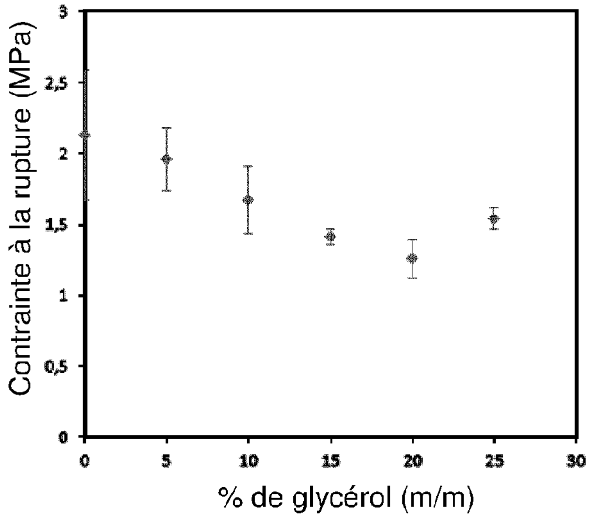


FIG 15

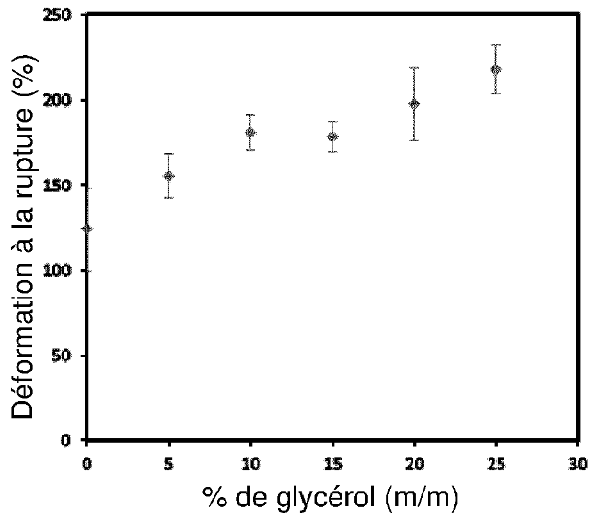

FIG 16

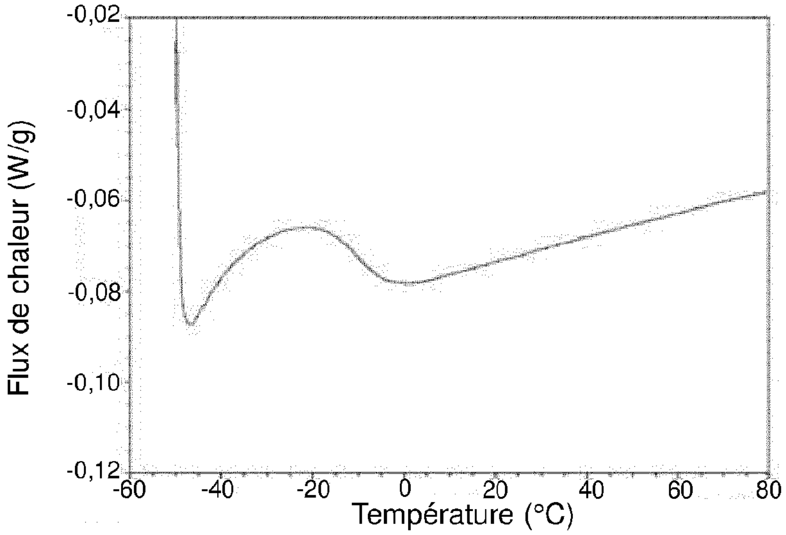


FIG 17

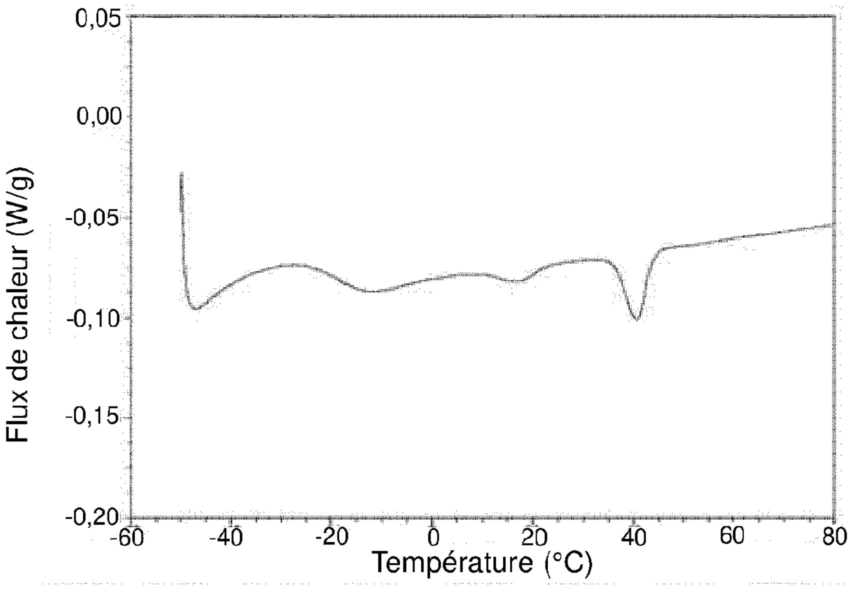


FIG 18

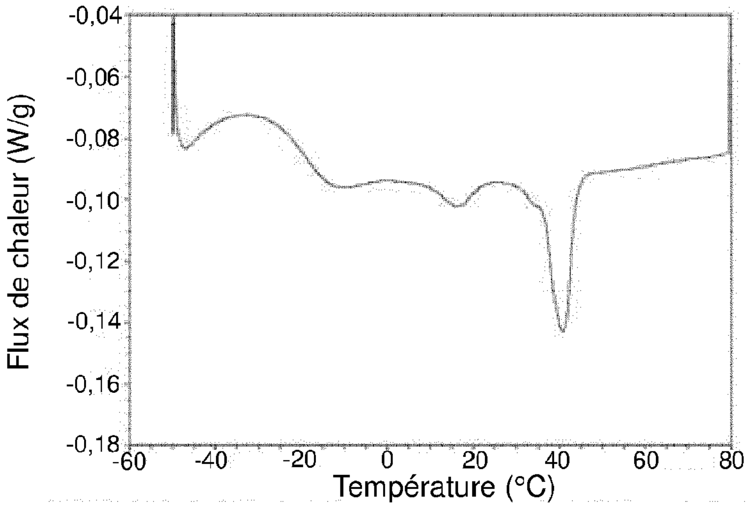

FIG 19

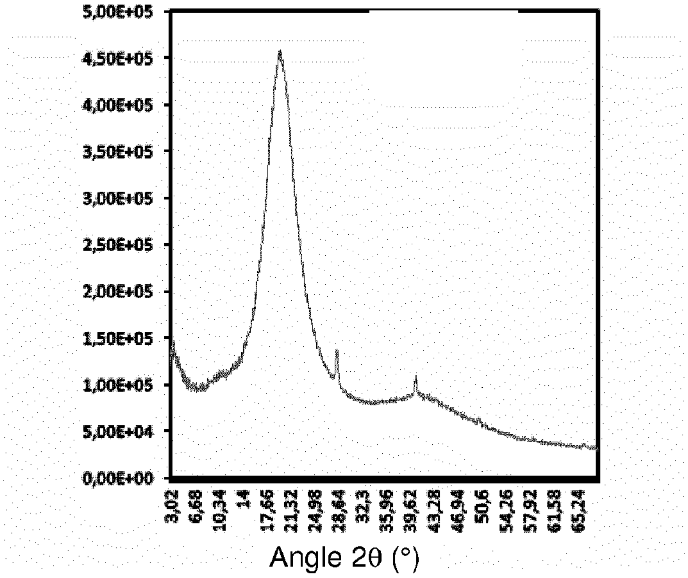
5,00E+05
4,50E+05
4,00E+05
3,50E+05
3,00E+05
2,50E+05
2,00E+05
1,50E+05
1,00E+05
5,00E+04
0,00E+00
3,02
6,68
10,34
14
17,66
21,32
24,98
28,64
32,3
35,96
39,62
43,28
46,94
50,6
54,26
57,92
61,58
65,24
Angle 2θ (°)

FIG 20

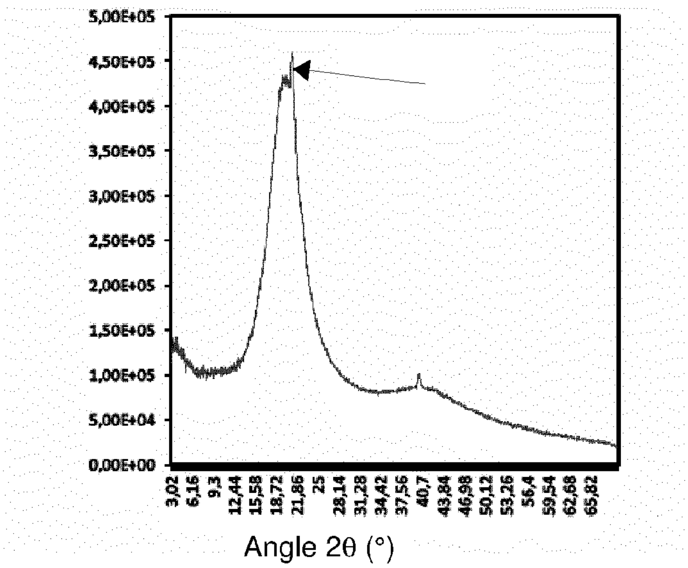
5,00E+05
4,50E+05
4,00E+05
3,50E+05
3,00E+05
2,50E+05
2,00E+05
1,50E+05
1,00E+05
5,00E+04
0,00E+00
3,02
6,16
9,3
12,44
15,58
18,72
21,86
25
28,14
31,28
34,42
37,56
40,7
43,84
46,98
50,12
53,26
56,4
59,54
62,68
65,82
Angle 2θ (°)

FIG 21

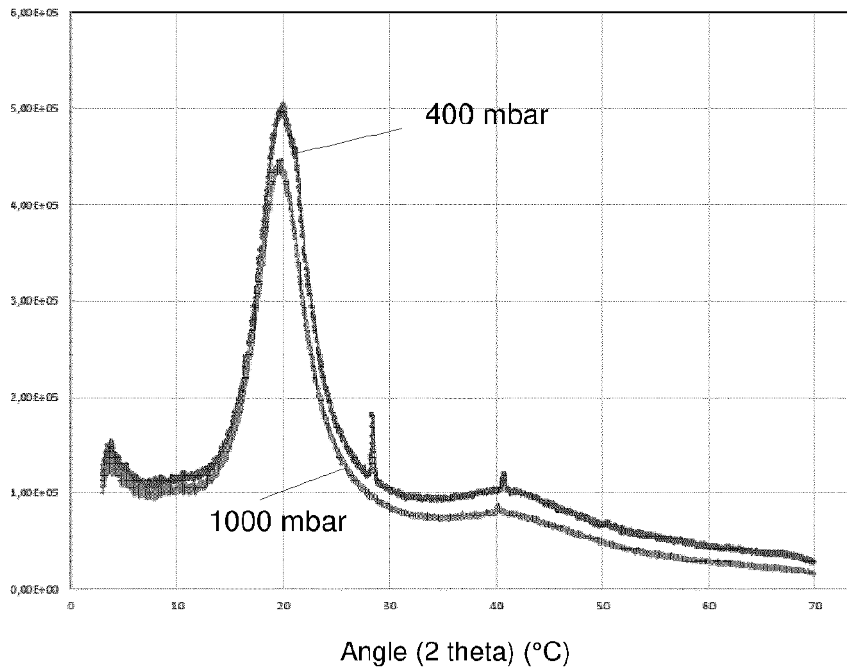


FIG 22

A/

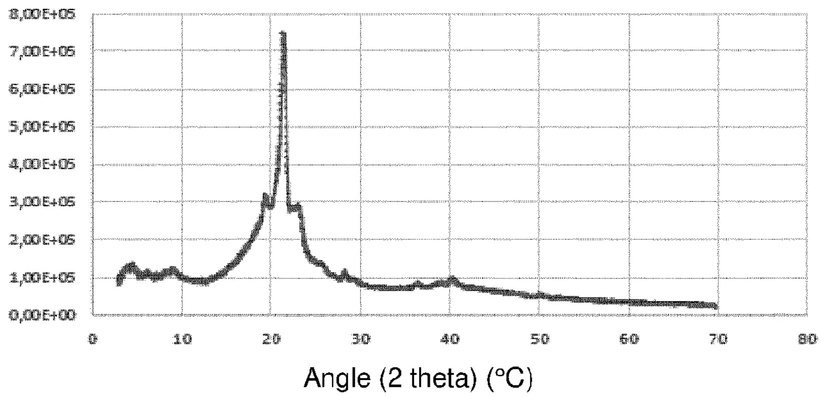


B/

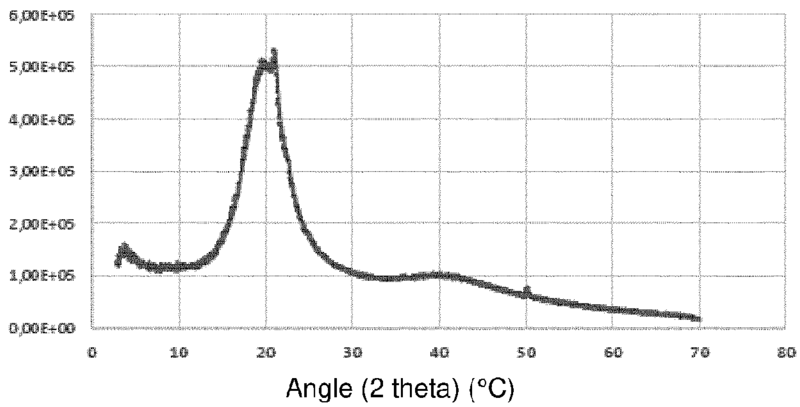

FIG 23

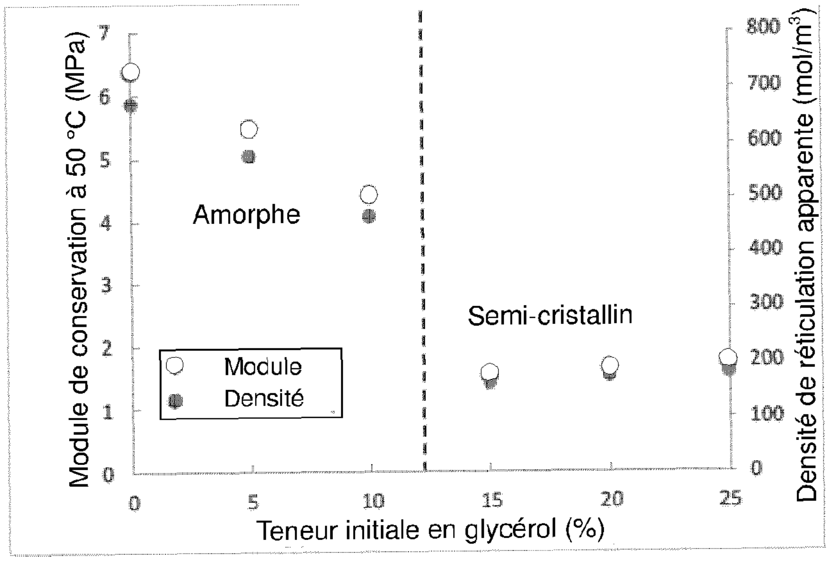


FIG 24

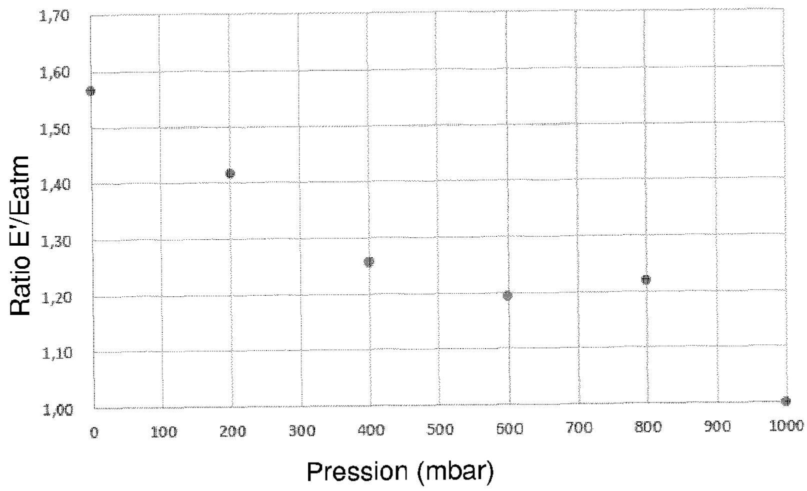


FIG 25

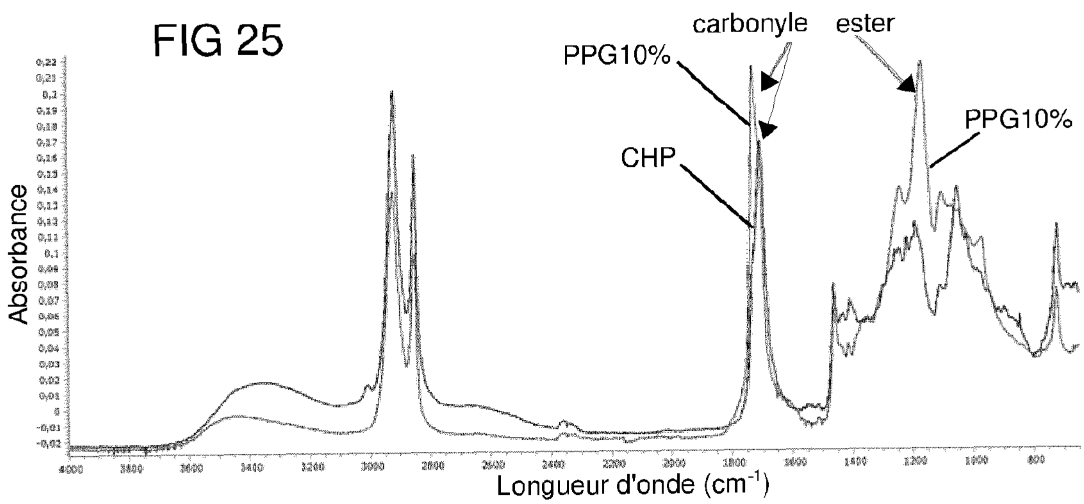

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2017147708 A
- WO 2011144792 A
- WO 2015028299 A


### Littérature non-brevet citée dans la description


- **BENITEZ et al.** *dans Biochimica et Biophysica Acta,* 2004, vol. 1674, 1-3
- **BENITEZ et al.** *dans Materials,* 2018, vol. 11, 2211
- **PHILIPPE et al.** *Plant Physiology,* 2016
- **PHILIPPE et al.** *dans Plant Physiology,* 2016, vol. 170, 807-820